# EUROPEAN PATENT SPECIFICATION

(11) **EP 0 819 274 B1**
(45) Date of publication and mention of the grant of the patent: **06.11.2002**
(21) Application number: 96907687.6
(22) Date of filing: 28.03.1996
(51) Int. Cl.: G06F 9/44, G06F 9/46

(54) **METHOD AND SYSTEM FOR EXECUTING AN APPLICATION PROGRAM**
VERFAHREN UND VORRICHTUNG ZUR AUSFÜHRUNG EINES ANWENDUNGSPROGRAMMS
METHODE ET SYSTEME POUR EXECUTER UN PROGRAMME D'APPLICATION

(30) Priority: 07.04.1995 JP 10706695; 06.06.1995 JP 13938595; 05.10.1995 US 539806
(43) Date of publication of application: 21.01.1998
(73) Proprietor: DreamTechnologies Co., Ltd., Tokyo 150-6013 (JP)
(72) Inventor: TABUCHI, Daisuke, Chiyoda-ku Tokyo 101 (JP); SHOJI, Wataru, Chiyoda-ku Tokyo 101 (JP); NAKAJIMA, Ichiro, Chiyoda-ku Tokyo 101 (JP)
(74) Representative: Heusler, Wolfgang, Dipl.-Ing.
(86) International application number: PCT/JP96/00821
(87) International publication number: WO 96/031823

(56) References cited:
- EP-A- 0 547 622
- EP-A- 0 566 482
- EP-A- 0 578 391
- WO-A-94/28480

## Description

The invention relates to a method of operating a computer to execute an application program in a window-based environment, comprising the features set forth in the preamble of claim 1, and to an apparatus for using such method including the features outlined in the preamble of claim 9.

The invention is useful in a data processing system capable of easily constructing computer application programs which are accompanied with processing of mainly images and speeches. The invention also relates to a computer program architecture and method for program modules which are not controlled by another program module.

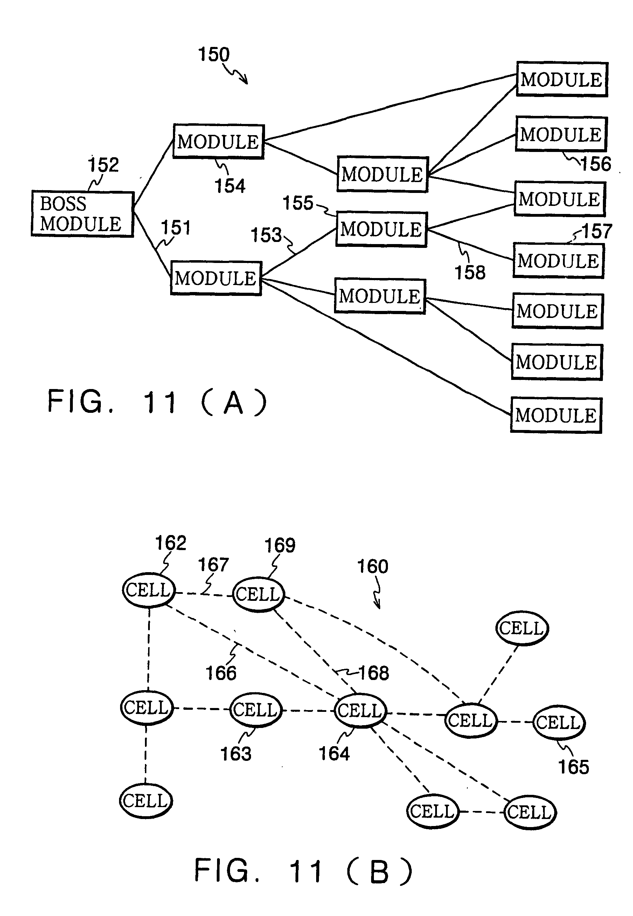

Reference WO-A-94/28480 discloses a system and method for authoring interactive multimedia presentation, in the window -based environment. This system displays a simulator window with which a user can author multimedia data. The user interface is disclosed in detail as well as non-hierarchical links between windows. In absence of any program architecture for achieving the non-hierarchical links between windows, the system must be formed with the conventional program architecture shown in Fig. 11A of the present specification. Therefore, the operation speed of the system is slow and the size of the program is large.

EP-A-0 547 622 also discloses a system for processing graphic data in a window-based environment and describes the user interface and the structure of the data to be processed. Also this system must be formed with the conventional program architecture shown in Fig. 11A of the present specification. Therefore, the operation speed of the system is slow and the size of the program is large.

The article "Principles of Concurrent Programming" of M. Ben-Ari, Prentice-Hall International, 1982, page 6, lines 2 to 16 and figure simply discloses a parallel processing including one program module for parallel processing.

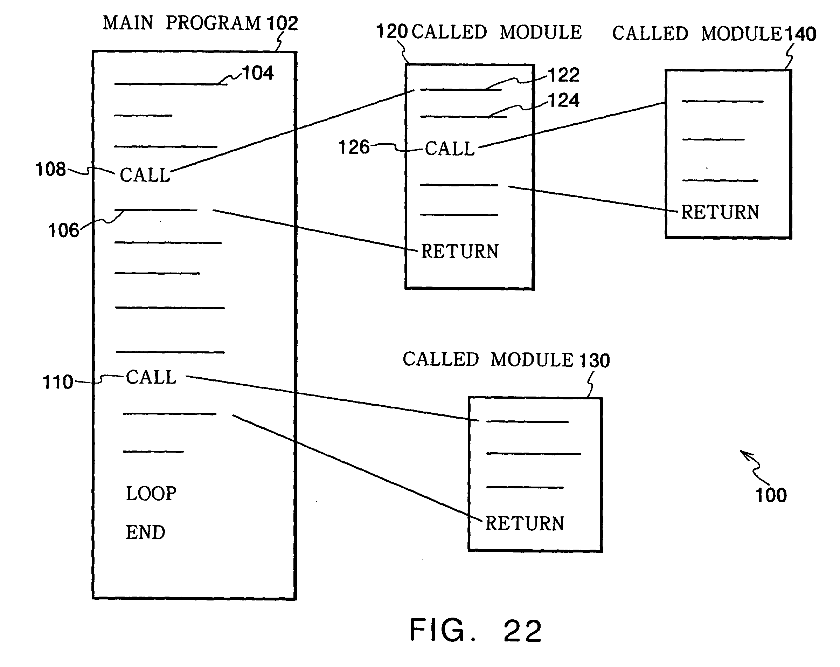

Conventional computer program architecture consists of a main program and a plurality of program modules. The main program typically controls and coordinates the operation of the program modules. Fig. 22 is a schematic diagram of a program 100 having such an architecture. In Fig. 22, a main program 102 contains a plurality of statements, such as 104 and 106. Some of the statements could be CALL statements, such as statements 108 and 110. These two CALL statements, when executed, will invoke program modules 120 and 130. Main program 102 may contain a LOOP statement which causes main program 102 to execute continuously in a loop. Main program 102 also contains a STOP statement for terminating the program. It should be appreciated that program 100 could be written in different programming languages, and the precise syntax of the statements and program structure could vary with the programming languages.

Program 100 contains a plurality of program modules, such as modules 120 and 130, called by main program 102. Module 120 contains a plurality of statements, such as statements 122 and 124. It could also contain a plurality of CALL statements, such as statement 126. This statement, when executed, will invoke another module 140. Finally, module 120 contains a RETURN statement.

When CALL statement 108 is executed, main program 102 jumps to module 120. Statements 122, 124 and the rest of the program are executed. Upon executing the RETURN statement in module 120, program 100 returns to statement 106, which is the statement following CALL statement 108. At this time, the control of program 100 is returned to main program 102. Main program 102 continues to execute.

The structure of all the modules is similar to that of module 120. Similarly, the jump-return mechanism, described above, is carried out by all the CALL statements in program 100. Consequently, they will not be further described in this specification.

In order to carry out this jump-return mechanism, the return addresses of the CALL statements need to be saved in RAM (typically in a memory structure called a stack). Other essential state information of the computer prior to jumping to the called module, such as values of registers, may also be saved if there is a need to do so (e.g., when jumping to an interrupt service routine). Thus, when main program 102 calls module 120, the contents of these registers may also be pushed (i.e., saved) in the stack. Similarly, when module 120 calls module 140, the return address of module 120 also needs to be saved. The contents of appropriate registers may need to be pushed in the stack. Thus, the size of the stack could be large when a large number of CALL statements are executed.

When a RETURN statement is executed, the return address is used to return to the calling program. The saved information is also retrieved.

Typically, a program in the above described conventional architecture contains many CALL statements and many modules. These modules could call other modules (e.g., module 120 can call module 140), thereby forming a chain of CALL statements. The precise history of this chain needs to be preserved so that the last called module can return to the main program. One of the problems of the conventional architecture is that the time to travel the chain could be very long. As pointed out above, each time a CALL statement is invoked, certain amount of state information needs to be saved, resulting in overhead in execution. Each time a RETURN statement is executed, the saved information needs to be restored, again requiring overhead in execution. As a result, the execution speed of programs written using conventional architecture is slow.

The following are some of the characteristics of the conventional architecture: (a) there is a controlling ("boss") program, e.g., main program 102, (b) all the linkage information (e.g., return address and registers) needs to be preserved when one part of the program (a calling program such as main program 102 or some of the modules) transfers execution to another (the called program), and (c) the linkage information is used to return control and information to the calling program. This architecture could be called a "boss" architecture. The calling module can be considered a master while the called module can be considered a slave executing commands issued by the master and then reporting results to the master.

Recently,. other programming architectures have been developed. However, they are also based on the boss architecture. One example is object-oriented programming. This method allows codes to be reused and applications developed relatively rapidly. However, the applications still have a controlling body which adds tremendous overhead.

Advances in program architecture have also been made in operating environments. One example is an interprocess communication protocol called dynamic data exchange (DDE) used in Microsoft's MS Windows environment. DDE uses a shared memory to exchange data between processes and a protocol to synchronize the passing of data. The heart of DDE protocol is the DDE message. A process (client) can ask another process (server) to perform a service. Specifically, the client issues a WM_DDE_EXECUTE message to post a command to the server by storing a command string in a global memory block and passing to the server a handle to the global memory block. The server subsequently returns a WM_DDE_ACK message to the client. If the server successfully executes the command, the WM_DDE_ACK message would return a TRUE value to a DDEACK structure member labelled "fAck." If the command is not successfully executed, the server posts a WM_DDE_ACK message with "fAck" set to FALSE. When the client receives the WM_DDE_ACK message from the server, it deletes the command string from global memory and proceeds to take appropriate actions accordingly.

It is clear that interprocess communication via DDE has many characteristics of the conventional architecture shown in Fig. 22. Specifically, the preservation of linkage information and the return of control to the client are important aspects of DDE. While the architecture of Fig. 22 stores the content of a few registers and the return address in each interprocess communication, DDE uses elaborate commands and data structure. As a result, DDE is even less efficient than the architecture of Fig. 22.

Another example of new developments in operating environment is an architecture used in MS Windows called OLE (Object Linking and Embedding). This architecture allows one application (e.g., a word processor program) to be linked to one or more applications (e.g., a spreadsheet program). In the terminology of OLE, applications can be classified as client applications and server applications. MS Windows uses a "registration database" to maintain a collection of information about OLE applications and file extensions for MS Windows applications. All communication between applications is handled by OLE. Specifically, OLE applications communicate through the use of three dynamic-link libraries: OLECLI.DLL, OLESRV.DLL, and SHELL.DLL. The SHELL.DLL enables applications to communicate with the registration database. The OLECLI.DLL is the OLE client library and the OLESRV.DLL is the server library. The OLE servers and client libraries communicate with each other through DDE messages. The typical path of communication for an OLE function includes the call of the function, DDE messages between OLE libraries, and disseminating information to the client and server applications.

In one example, when the OLESRV.DLL library receives notification from the OLECLI.DLL library that a client application needs an object, the OLESRV.DLL library calls appropriate server methods. For example, OLESRV.DLL calls a ServerOpen() method when a user activates an object in an OLE: client application. The server application then performs the operation of the Server Open() method. If ServerOpen() is performed successfully, the method returns OLE_OK. If ServerOpen() is not performed successfully, an OLE_ERROR_OPEN is returned. The client application can then take appropriate actions.

The registration database in OLE contains the linkage or history of the applications. The registration database and the client-server structure of OLE form a boss architecture. Further, even a simple communication between applications requires the involvement of many Windows components (e.g., DDE, dynamic-link libraries, etc.). It is well-known that MS Windows applications require a lot of memory and processor bandwidth. The boss architecture together with the complicated structure of MS Windows' components could be one reason for the slow performance.

### SUMMARY OF THE INVENTION

Accordingly, it is an object of the present invention to provide a data processing system and a computer program architecture and method that accomplish applications whose execution speeds are fast and which are easy to prepare.

This object is being solved by the features mentioned in claims 1 and 9, respectively. Particular embodiments of the invention are described in the dependent subclaims.

### BRIEF DESCRIPTION OF THE DRAWINGS

Fig. 1 is a diagram showing the flow of data processing in a data processing system of the present invention;
Fig. 2 is a block diagram showing the physical structure of the data processing system of this invention;
Fig. 3 is a block diagram showing the logical structure of the data processing system of this invention;
Fig. 4 is a diagram showing one example of a window;
Figs. 5A through 5D are diagrams showing procedures for setting parameters;
Fig. 6 is a flowchart illustrating an action setting process;
Fig. 7 is a diagram showing the structure of an action setting screen;
Fig. 8 is a flowchart illustrating an operation when a vector image is indicated;
Fig. 9 is a flowchart for explaining an automatic invoking process;
Figs. 10A through 10G are charts for explaining the flow of control action by action;
Figs. 11A and 11B show a comparison between prior art architecture and the architecture according to the invention;
Fig. 12 is a diagram showing the interaction of cells according to the invention;
Fig. 13 shows a block diagram of the structure of a DNA file of the present invention;
Fig. 14 shows a block diagram of the structure of a cell according to the present invention;
Fig. 15 is a block diagram of a computer system running an applications according to the present invention;
Fig. 16 shows various windows associated with visual cells during the execution of a multimedia development system according to the present invention;
Fig. 17 shows a windows for a user to enter information to a DNA file according to the present invention;
Fig. 18 shows various windows associated with a button cell and visual cells during the execution of a multimedia development system according to the present invention;
Fig. 19 is a window showing the format for a user to specify a button according to the present invention;
Fig. 20 is a window showing the format for a user to specify a visual cell associated with a button cell according to the present invention;
Fig. 21 is a flow chart showing a cell notification procedure according to the present invention; and
Fig. 22 is a diagram shown a prior art programming architecture.

### DETAILED DESCRIPTION OF THE PREFERRED EMBODIMENTS

A data processing system (a program developing tool and an application program made by this tool) according to the invention will now be described.

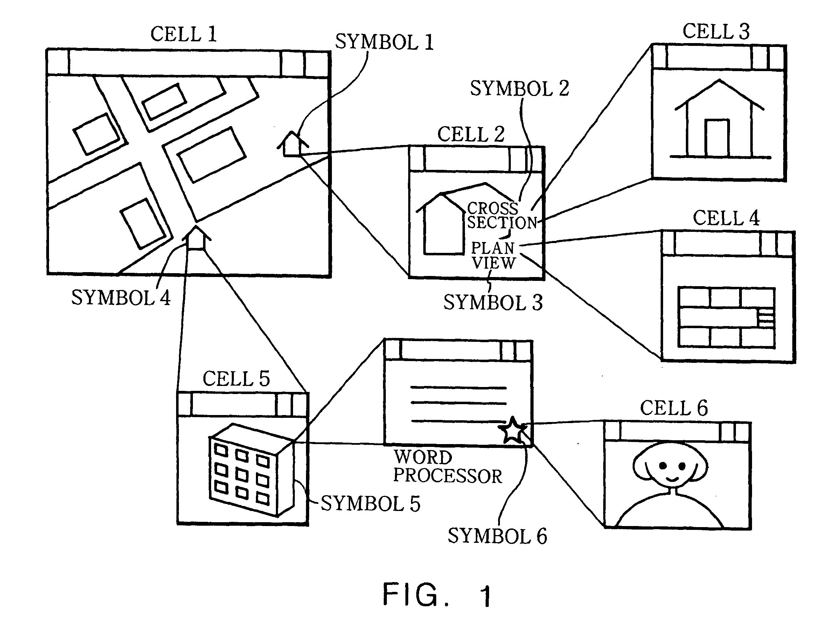

Fig. 1 exemplifies the flow of data processing that is executed by the data processing system of this invention.

In this example, a map including buildings is displayed in a given window (i.e., cell 1). When a user clicks buildings (symbol 1 or 4) with a mouse in this situation, further windows open as shown by cells 2 and 5, presenting enlarged perspective views of the buildings. When the user clicks the "cross-sectional view (symbol 2)" or "plan view (symbol 3)" on the enlarged perspective view of cell 2 with the mouse, new windows opens as shown in cells 3 and 4, showing the cross section and plan view of the building.

When the user clicks the enlarged perspective view (symbol 5) of cell 5 with the mouse, a word processor as an external program is executed to permit document data about the building to be edited. When the user clicks a symbol 6 on the document prepared by the word processor, a cell 6 is invoked to open a new window showing the photograph of the designer of that building.

Conventionally, such a program is designed as a single program including cells 1 to 6 and the word processor. This single program has a pyramid structure that is managed by a single managing program (manager). Writing such a program requires the work of an expert who understands the necessary program language. Further, such a program becomes too huge to reduce the operation speed.

To cope with this shortcoming, a program to be invoked (EXE file) is designed to execute only basic actions in this embodiment. The "basic actions" mean the opening and closing of a window, image scrolling, invoking of another application, selection of a display layer, generation of sounds and so forth. A parameter which specifies an action to execute a program is associated with each symbol, so that clicking each symbol runs the program in accordance with the associated parameter. It is therefore possible to easily perform a process of, for example, opening a window and displaying a desired image on the window. As windows are sequentially associated with symbols and parameters, the data processing in Fig. 1 becomes possible. A single program that is running in the data processing is called "cell." In the example in Fig. 1, therefore, a maximum of six execution programs are executed simultaneously and a maximum of six cells coexist. Those six cells construct a single application.

Each cell is formed by a separate EXE file which, once invoked, becomes independent of other EXE files. For example, cell 2 is not called by a call command from cell 1. At the time of closing cell 2, it is unnecessary to return to the processing of cell 1. It is therefore unnecessary to save the return address to cell 1, the statuses of the associated registers, etc. when cell 2 is to be opened. Cell 2 can be closed in accordance with the self-processing, regardless of the operation of cell 1. Cell 1 can be closed during cell 2 remains opened.

The cells communicate with one another to exchange commands and data, and each can close other cells and/or itself, and can request some process.

There is no program on the OS (Operating System) which generally manages those cells. In other words, there is no program which performs the general management on how many windows are opened, and on the status, display contents and the like of the individual windows.

With this structure, by merely associating symbols with parameters, other windows (cells) can be opened one by one to develop images thereon, so that ordinary people who do not understand program languages can construct applications. Because the size of a program to be executed is small, there is no program which performs the general management and there is no overhead, fast processing is accomplished.

A description will now be given of the structure of the data processing system which executes the above-described data processing.

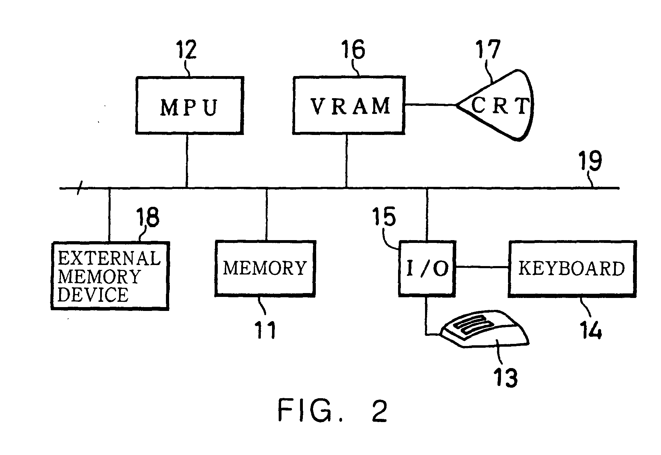

Fig. 2 shows the structure of the data processing system according to this embodiment. As illustrated, this data processing system comprises a memory 11, an MPU (MicroProcessor Unit) 12, a mouse 13, a keyboard 14, an I/O port 15, a VRAM (display data RAM) 16, a CRT 17, an external storage device 18 and a bus 19.

Memory 11 stores the aforementioned execution program (EXE file), parameter file, OS, data and so forth. MPU 12 operates to process data in accordance with the program stored in memory 11. I/O port 15 informs MPU 12 of inputs from mouse 13 and keyboard 14. VRAM 16 stores bit map data which defines a display image. CRT 17 displays bit map data stored in VRAM 16. External memory device 18 comprises a hard disk device, a CD-ROM device or the like where the OS, image data files (image data file library), audio data files (audio data file library), etc. are stored, and transfers a program to be executed and data to memory 11. Bus 19 transfers data.

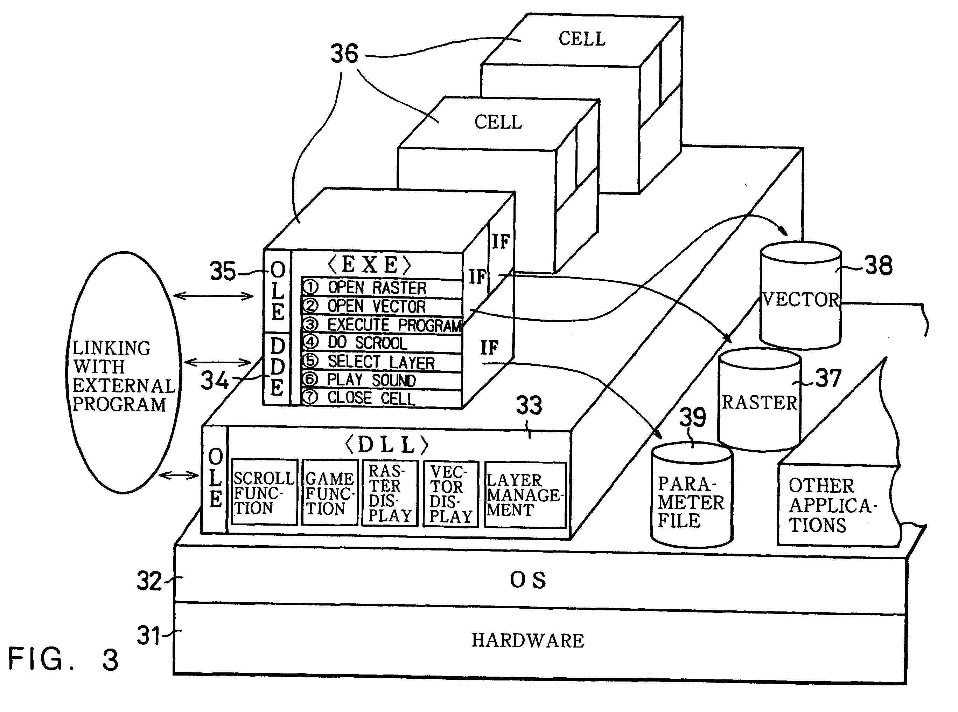

The logical structure of this data processing system is shown in Fig. 3 in which hardware 31 is located at the bottom-most layer and OS 32 is positioned on hardware 31. Available as OS 32 is any operating system which has DLL (Dynamic Link Library) 33, DDE (Dynamic Data Exchange) 34 and OLE (Object Linking Embedding) 35, such as MS-Windows, a product of Microsoft Corporation, or which has equal or better performance than MS-Windows.

DLL 33 includes a scroll function, game function, raster display (bit map image data display) function, vector display (vector image data display) function, layer management function, and drawing (creating a vector image) function.

A plurality of cells 36 are independently executed on DLL 33. The individual cells 36 are formed by executing the same execution program. Cells 36 are logically located at the same level, and each cell manages (e.g., invokes, closes and so forth) itself or other cells 36. On the OS, there is no program which performs the general control of the cells, e.g., which controls the number of cells, the mutual relationship among the cells, the contents of the cells and so forth. Each cell 36 executes the following functions.
(i) Function (Open Raster) to access to a raster image file (bit map pattern image file) 37 via the interface and display a raster image on a window. At this time, the initial display scale can be freely set by setting parameters.
(ii) Function (Open Vector) to access to a vector image file 38 via the interface and display a vector image. At this time, the initial display scale can be freely set by setting parameters to be discussed later.
(iii) Function (Execute Program) to invoke an external program, such as a word processor or CAD, via OLE 35 of OS 32. If the external program is of a type which is invoked by reading a file specified by a parameter, the same program can be used in various forms. It is therefore possible to utilize every software resource which operates on the OS in use.
(iv) Function for scroll using a scroll bar and for free scroll (which controls the scroll speed and scroll direction in accordance with the direction and the distance of the mouse cursor from the center of a window) when specified image data has a size large to fit in a window. At this time, each overwritten graphics data scrolls in synchronism with the background. Automatic scroll may be accomplished by the DLL function.
(v) Function to set and change a display layer (which will be discussed later). A raster image (bit map image) BMP and the vector image TIF of n layers can be displayed, arbitrarily overlapping each other. For example, the image of a map may be displayed as a raster image and the vector images of buildings may be formed on an arbitrary layer so that both images are shown overlapping each other, thus permitting the image as shown in cell 1 in Fig. 1 to be displayed. Further, a layer bar 44 (to be described later) shown at the top of the window may be clicked to display a layer menu, which allows the vector image of n layers to be arbitrarily set or altered or allows the display to be switched.
(vi) A designated speech file (WAV, MID or the like) can be reproduced and sounded.
(vii) Function to close a cell. A cell can close itself or other cells.

There is also a function to draw and edit an image on raster data or vector data displayed on a window. As those images are all drawn in a vector form, the functions to copy, move, modify and delete images are accomplished.

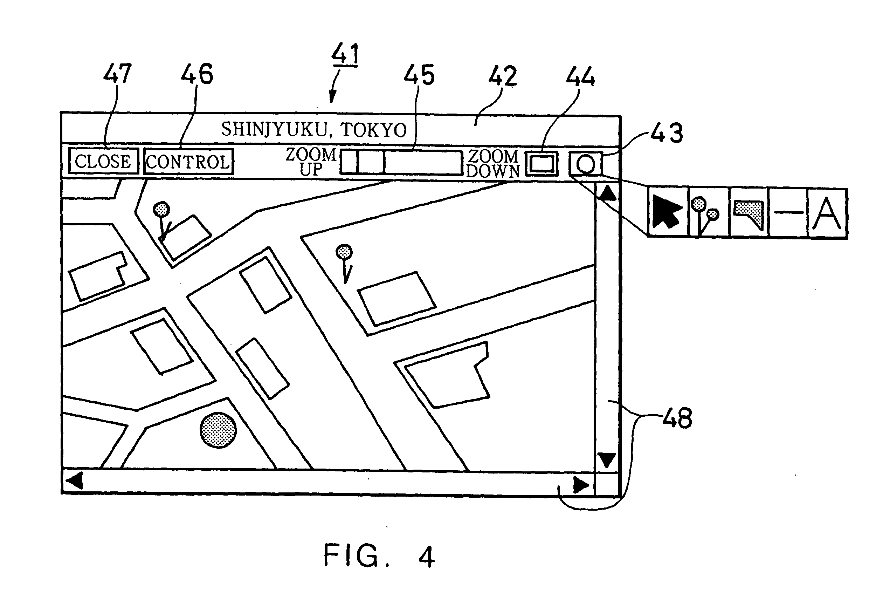

Fig. 4 exemplifies a screen image of a window 41 of one cell 36.

Window 41 includes, at its top, a window title bar 42 indicating a window title, a tool bar 43 for displaying editing tools, a layer bar 44 for setting and changing the display layer, a zoom bar 45 for zooming up and down the displayed image, a control bar 46, a close bar 47 and a scroll bar 48.

Referring to Fig. 3, a parameter file 39 is a file in a text form where invoking information for invoking an execution program is stored.

Each cell 36 refers to the associated parameter file 39 via the interface (IF) to accomplish the specified mode and function. A plurality of cells 36, when linked together, operate as a unified single application.

The parameter file 39 includes the following information.
(1) Window title.
(2) Initial display position of a window to be displayed.
(3) Initial size of a window to be displayed.
(4) Design of window to be displayed.
   (i) Presence/absence of frame lines
   (ii) Whether or not to display the title
   (iii) Whether or not to display the tool bar
   (iv) Display priority
(5) Cell type.
   (i) Raster display type
   (ii) Vector display type
   (iii) Program execution type
   (iv) Scroll execution type
   (v) Layer display type
   (vi) Audio playback type
   (vii) Cell termination type

An action can be registered for each image element drawn in window 41 via this parameter file 39, as has been described with reference to Fig. 1.

In the example in Fig. 1, new windows are opened for symbols 1 and 4 of buildings in cell 1 to register an action to display enlarged perspective views, after which an operation for displaying the enlarged perspective views in the associated windows by designating symbols 1 and 4 with mouse 13. Since this action can be registered for every vector image, variations of processes are available.

An action that can be registered is basically an action an execution program can execute, i.e., an action cell 36 can execute. Registerable actions are as follows.
(1) Open raster action (Open Raster).
(2) Open vector action (Open Vector).
   Those two actions generally include an action to open a new window.
(3) Program execution (Execute Program).
(4) Automatic scroll action (Do Scroll).
   This action automatically scrolls the displayed image from one image specified by a parameter to another image specified by a parameter or along a continuous straight line.
(5) Layer display action (Select Layer). This action displays the specified layer.
(6) Sound generation action (Play Sound).
   This action plays the specified speech file to play sounds.
(7) Cell close action (Cell Close).
   This action closes the specified cell (window). A cell can close itself or can close any number of other cells. It is also possible to close all the cells.

The registration of an action is performed every time a vector image is drawn on a window. The registration of an action may be disregarded in which case, the image becomes a simple image.

Actions can also be registered for a plurality of images on the window of one cell. Further, a plurality of actions can be registered for a single image. For example, it is possible to open one cell for a single image to display a raster image and automatically scroll the image in another window while playing sounds. Furthermore, the file name of a once registered parameter file may be used again to copy the action itself to somewhere else.

The individual cells conform to the DDE function the OS uses. This function allows the following various information to be exchanged in real time among cells and between an external application and each cell.
(1) Input side
   i) When coordinate values are input to a cell, the display position is switched to the coordinate position (the position can be retrieved by an external application by some kind of action).
   ii) When an image type, image attribute and display position are input, the specified image is automatically drawn at the specified position.
   iii) The window size, window display position and window design can be altered externally.
   iv) The display layer can be switched externally.
   v) The display scale can be changed externally.
   vi) The automatic scroll can be invoked externally.
   vii) Other various control information can be input externally to effect fine cell control.
(2) Output side
   i) When requested, the current display coordinates are output outside based on the specification of the DDE.
   ii) The image type, image attribute, layer number and so forth of the image indicated (pointed) by the mouse are output.
   iii) The detailed attributes of a window are output.
   iv) The current display layer number is output outside.
   v) The current display scale is output outside.
   vi) The other detailed status of each cell is output outside.

The individual cells also conform to the regular OLE and an OLE2 function both supported by the OS. Those functions allow an external application and individual cells to execute object-linked processing. That is, it becomes possible to invoke a cell or paste a word-processor screen or a table into a cell from within another application, to reproduce dynamic images, and so forth.

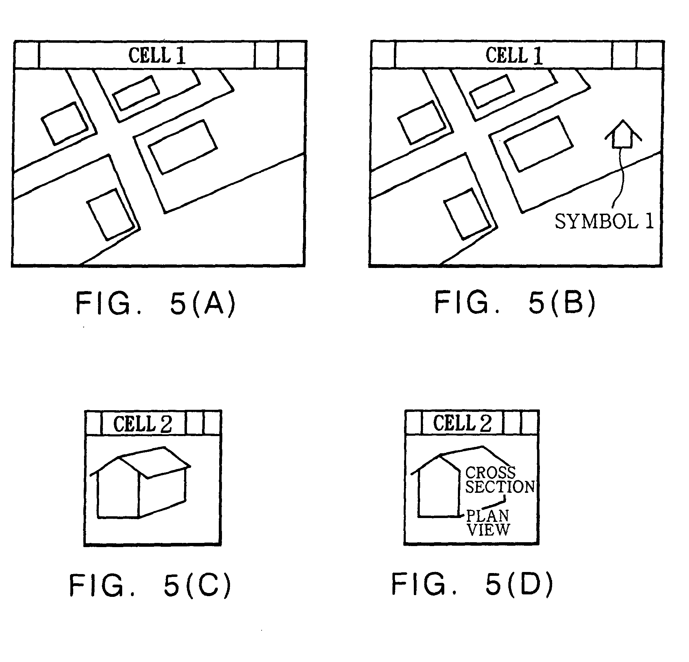

The operation of the thus constituted data processing system will now be described with regard to the case where cells are sequentially invoked as shown in Fig. 1 with reference to Figs. 5 through 10.

First, suppose that a map containing a raster image is displayed on the window of cell 1, as shown in Fig. 5A.

Under this situation, the vector image (symbol 1) of a building 1 is drawn on an arbitrary layer on the raster image using mouse 13, as shown in Fig. 5B. Alternatively, a symbol indicating building 1 may be selected from the library and may be placed at a desired position.

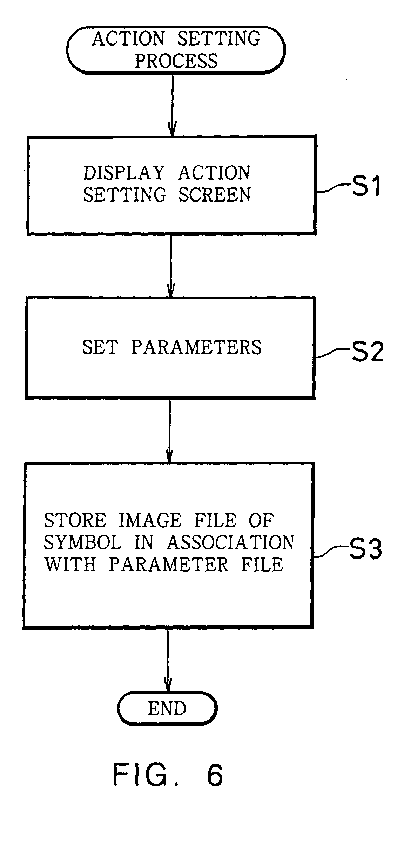

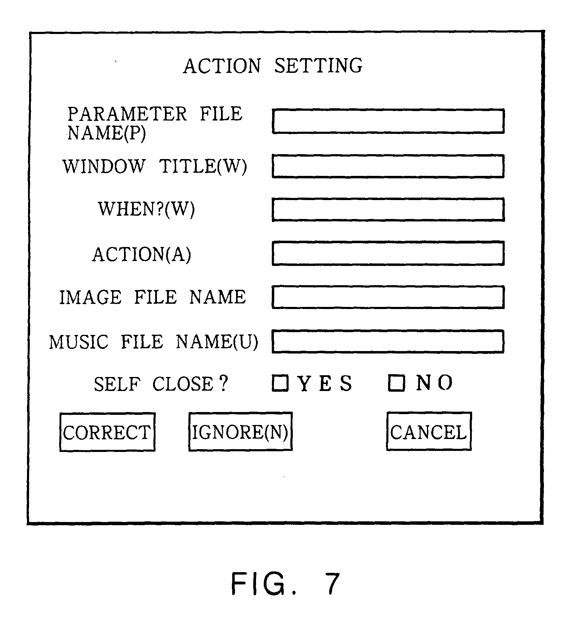

The DLL detects the drawing of the vector image on the window (including the selection of a symbol from the library) and informs cell 1 of that event. To assign an action to the vector image, cell 1 starts an action setting process shown in Fig. 6. First, an action setting screen shown in Fig. 7 is displayed (step S1). Then comes the specification of the parameter file name, the title of a new window to be opened, the timing for opening the window, an action, the name of the image file where an image to be displayed is stored, whether or not to close the currently open window, the name of the music file storing sounds to be played, and so forth in accordance with the contents of the action setting screen (step S2).

When the parameter file name is CELL2 and the raster image of the external perspective view of building 1 is stored in a file GAIKAN1.BMP in the directory RASTER on the drive C, for example,
"C:\RASTER\GAIKAN1.BMP" is specified as the image file name and "open a new window" is specified as the action. If the external perspective view of building 1 is stored in a vector image format in a predetermined file, the name of that file should be specified.

When the setting is completed, this window is closed. The DLL stores symbol 1 and the parameter file, set in step S2, in memory 11 in association with each other (step S3).

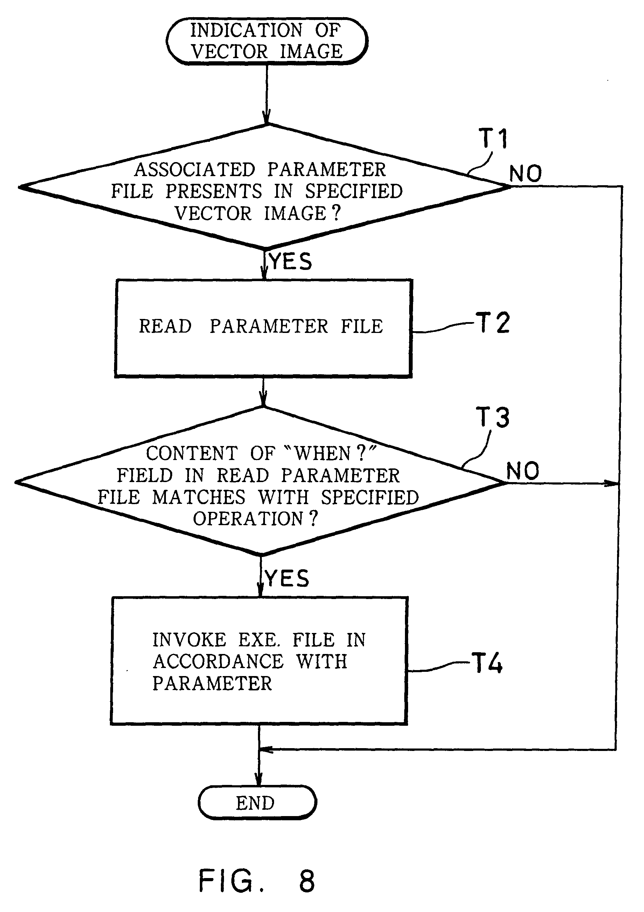

The window display at this stage becomes as shown in Fig. 5B. When symbol 1 is double clicked in this state, the DLL detects the event and the flow illustrated in Fig. 8 starts. First, it is determined if there is a parameter file associated with the double-clicked symbol 1 (step T1). As parameter file CELL2 is present in this case, this file is read out (step T2). Then, it is determined if the operation to specify the vector image (double clicking) matches with the operation set in the "WHEN?" field in the parameter file (step T3). Because both match with each other in this case, a program is invoked in accordance with the contents of parameter file CELL2 (step T4). As a result, a new window opens at the position matching with the contents of the parameter file. The enlarged perspective view (raster image) of building 1 stored in file GAIKAN1.BMP is displayed, with "CELL2" shown at the title bar of that window. In this state, two cells, cell 1 and cell 2, coexist.

Cell 2 is not called by cell 1 through a call-return process. In other words, cell 1 and cell 2 are respectively formed by independent EXE files, and independently invoked and executed. It is therefore unnecessary to save the return address to cell 1 and the value of the register at the time cell 2 is opened. This scheme can reduce the time needed for the save and restore actions, thus speeding up the overall process.

Next, the user moves the cursor on the displayed image of cell 2 and enters characters "CROSS SECTION" from keyboard 14 and draws a transparent square vector image (symbol 2) over the characters. In this state, the vector image is written over the raster image. The DLL informs cell 2 of this drawing action and the flow in Fig. 6 is initiated, displaying the action setting screen (step S1). In accordance with the displayed contents, the user sets the parameter file name, the name of the file where the cross-sectional view of building 1 is stored, and so forth (step S2). Then, the image file of symbol 2 and the parameter file are stored in association with each other (step S3).

Likewise, the user enters the characters "PLAN VIEW" (symbol 3) on the displayed image of cell 2 from keyboard 14 and draws a transparent square image over the characters. This drawing action is detected in step S1 in Fig. 6, and the action setting screen is displayed (step S1). When the proper parameters are set (step S2), symbol 3 and the parameter file are stored in association with each other (step S3).

After the above setting, as symbol 3 or the string of characters "CROSS SECTION" is double clicked, cell 3 opens to show the cross section of building 1. When a symbol 4, or the string of characters "PLAN VIEW" is double clicked, cell 5 opens to show the plan view of building 1.

Likewise, the vector image (symbol 4) of a building 2 is drawn on the screen of cell 1. Then, the associated action, i.e., opening a window is specified, and the name of the file holding the perspective view of building 2 is specified as the name of the image file. The other setting is likewise performed.

After the setting is completed and the parameter setting screen is closed, double clicking symbol 4 opens a new window, showing the enlarged perspective view of building 2.

A transparent vector image is drawn as symbol 5 on the displayed, enlarged perspective view of building 2. Then, a command to invoke a word processor as an external program is set as an action associated with symbol 5.

When symbol 5 is double clicked after the setting has been completed, the word processor program is invoked via the OLE function. Then, the user can prepare desired character information using this word processor. Further, the user draws a vector image on the prepared document, designates the opening of a new window as an action to this vector image, and specifies the file containing the photograph of the designer of building 2 as image information. Thereafter, double clicking symbol 6 shows the photograph of that designer.

It is possible to set the correlation among a plurality of cells shown in Fig 1 in the above-described manner.

As is apparent from the above, this embodiment can easily construct a data processing system which allows a plurality of cells to coexist by associating an arbitrary vector image on a window with a parameter file and invoking an execution program in accordance with the parameter file associated with the double-clicked vector image, and which allows those cells as a whole to function as a single application. Further, each cell is comprised of an execution program which performs a basic operation, such as opening or closing a window, and there is no boss (managing program) on OS 32 to systematically manage the individual cells. Therefore, execution programs can be written in relatively small sizes, thus ensuring a faster operation speed. In other words, an ordinary program has a pyramid structure and a boss which systematically manages a plurality of running programs positions at the top of the pyramid structure. However, in this embodiment, the individual cells manage one another and there is no managing program equivalent to the boss.

Since this data processing system can utilize external programs, such as a word processor, data base, spreadsheet and CAD, and data via the OLE of the OS, it has a greater generality. For example, raster data stored in a CD-ROM available on the market may be used as a map, the layer display function can be used to place the vector image of a traffic light at each intersection on a layer 1, place the vector image of underground pipes on a layer 2 and place the vector image of a subway route map on a layer 3, and those layers may be switched from one another or may be placed one on another on the map.

With the open raster action assigned to each vector image, it is possible to easily prepare such an application as to display the photograph of a traffic light upon double-clicking the image of that traffic light, to display the name of an underground pipe, the cross section thereof and the internal wiring upon double-clicking the image of that underground pipe, or to display the designs of trains and time tables upon double-clicking the subway route map, without requiring special programming skills or knowledge.

Although the timing of executing an action is specified as the time of double clicking in the above-described embodiment, it may be changed to the timing of performing another operation to specify a vector image, such as the time of single clicking.

For the screen scroll or the like, with regard to the vector image drawn on a window, the assigned action may be executed "when the entire vector image appears within the window," "when a part appears on the window," "when the entire vector image disappears (moves out of the window)," "when a part disappears," and so forth. In this case, those conditions should be set in the "WHEN?" field on the action setting screen shown in Fig. 7.

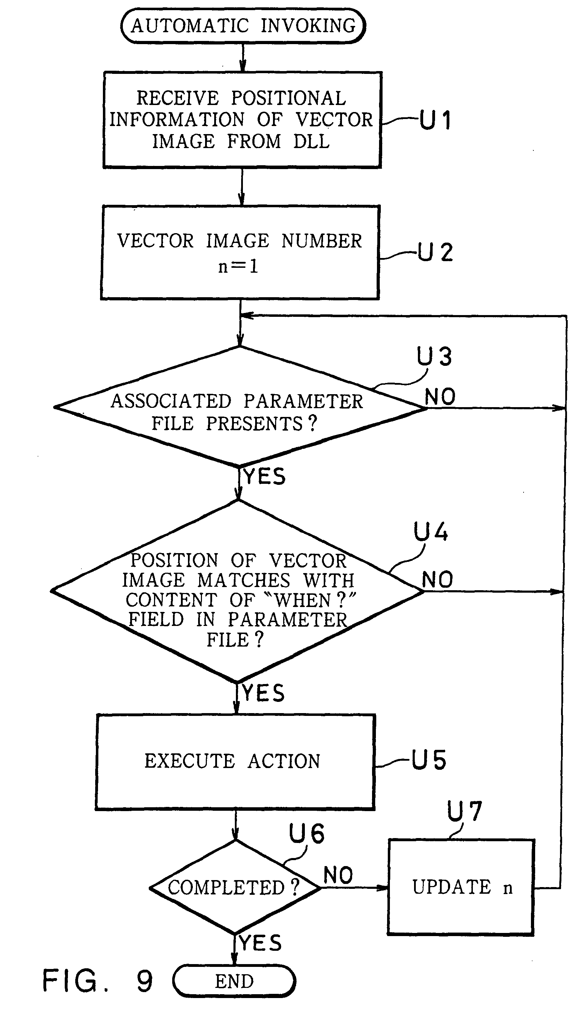

Referring to Fig. 9, a description will now be given of the operation at the time the displayed image is shifter under the above setting.

At the time an image is scrolled, for example, every time the contents of VRAM 16 are rewritten, each cell executes the flow illustrated in Fig. 9. First, each cell receives the positional information of each vector image from the DLL (step U1).

The number n of each vector image in the window is initialized (step U2).

Then, it is determined if there is a parameter file associated with each vector image (step U3).

When such a parameter file exists, it is determined if the contents set in the "WHEN?" field in the associated parameter file match with the detected contents (step U4).

When there is a match, an action set in the "ACTION" field in the parameter file is executed (step U5).

It is then determined if the process is completed for all the vector images (step U6). If the process is not completed, the number n of the vector image is updated (step U7), after which the flow returns to step U3 to execute the same process for the next vector image.

Suppose that "when a part disappears" is set in the "WHEN?" field in the parameter file of cell 2 in Fig. 1 and "open a new window" is set in the "ACTION" field.

In this case, when the displayed image of cell 1 is shifted and symbol 1 overlaps the frame of the window, a part of that symbol disappears so that cell 2 is invoked to open a new window.

The invoking timing is not limited to the above-discussed type in this embodiment, but a delay time, such as "10 seconds later" from double clicking or "one minute after the disappearance of the whole image," may be set. In this case, when the decision in step T1 in the flowchart in Fig. 8 or the decision in step U3 in the flowchart in Fig. 9 is "YES," it is determined if a delay time is set in the "WHEN?" field in the parameter file. If there is no delay time set, the flow proceeds to step T3 or step U5. If the delay time is set, on the other hand, measuring the time starts and when the specified delay time passes, the flow proceeds to step T3 or step U5.

It is also possible to automatically scroll the displayed image along an arbitrary line (vector image) depicted in the window and open a new window when the entire image is hidden. By designing the line as a transparent line, a program can be executed automatically without causing an observer to see the line. For example, it is easy to automatically execute such a program as to display a first image on a window, then scroll it, then close this window when the scrolling is complete, and open the next window, scroll a second image, and open the next window to display the first image again when the scrolling is complete.

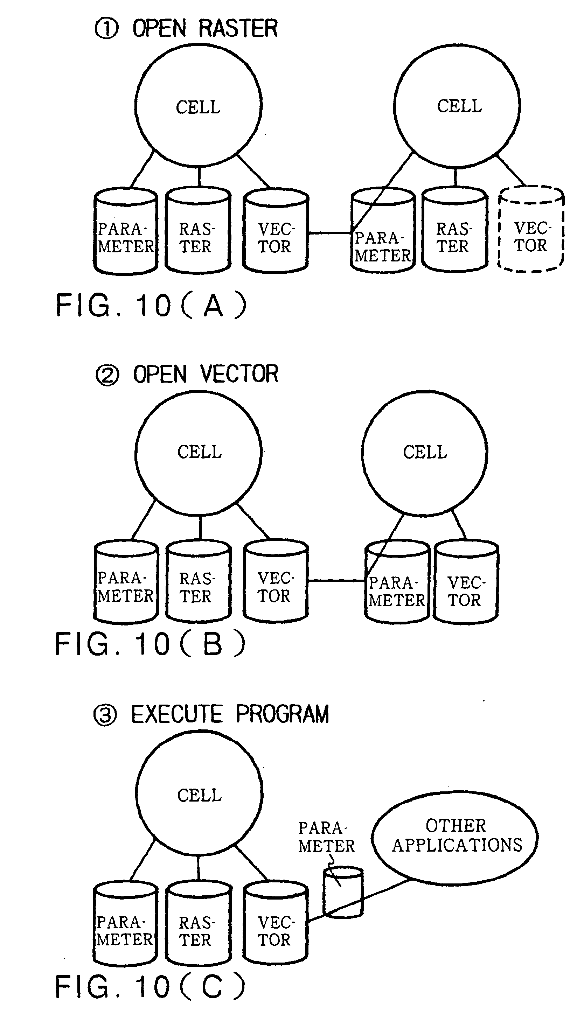

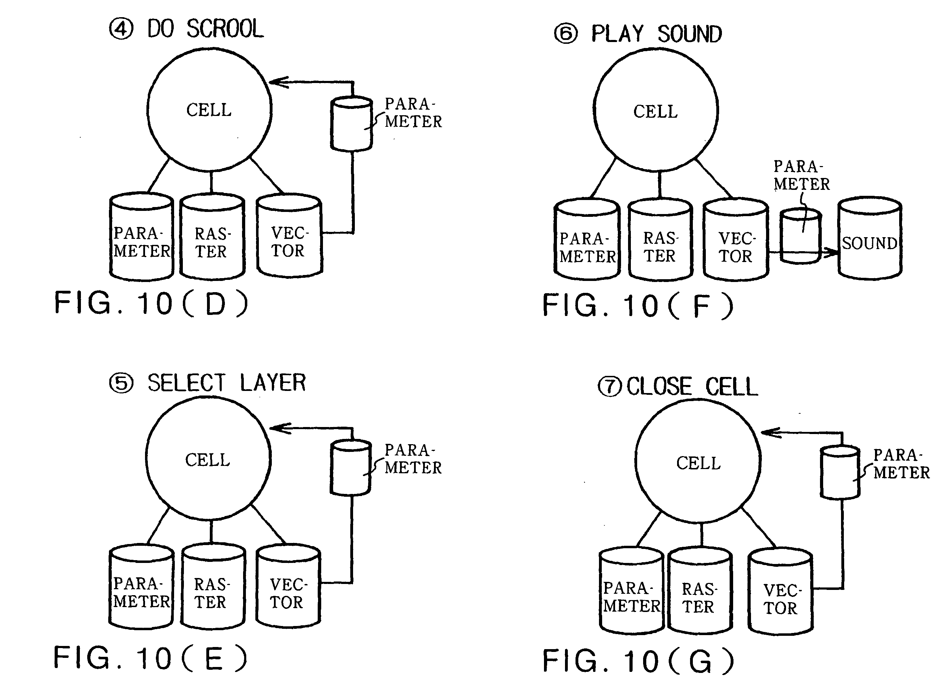

The foregoing description of this embodiment has been centered on the case of opening a new window as an action. The relationship among cells in this case is illustrated in Figs. 10A and 10B. Fig. 10A shows the file structure and the operational flow when a new cell is invoked to display a raster image on its window, and Fig. 10B shows the file structure and the operational flow when a new cell is invoked to display a vector image on its window.

Other actions can be specified in a parameter file and executed in the same manner.

Fig. 10C shows the case where another application is invoked on one window. More specifically, the parameter file is specified by the vector image of cell 1, and another program, such as a word processor, data base or spreadsheet, is invoked in accordance with the contents of the parameter file.

Fig. 10D shows the case where an image displayed on a window is scrolled on the same window. More specifically, the parameter file is specified by the vector image (vector) of cell 1, and the displayed image (raster and/or vector) is scrolled in accordance with the contents of this parameter file.

Fig. 10E shows the case where a layer to be actually displayed is selected on a window from a plurality of layers displayable on that window and display the selected layer on the window. More specifically, the parameter file is specified by the vector image (vector) of cell 1, and the layer to be displayed on the window of cell 1 is selected and displayed in accordance with the contents of the parameter file.

Fig. 10F shows the case where a process of playing sounds is performed as a consequence of some process on a window. More specifically, the parameter file is specified by the vector image of cell 1, and a predetermined music file is read to produce sounds in accordance with the contents of the parameter file.

Fig. 10G shows the case where a window closes itself. More specifically, the parameter file is specified by the vector image of cell 1, and this cell is itself closed in accordance with the contents of the parameter file.

Another action may be set, such as "close other windows" or "open a new window and close itself."

In the above-described embodiment, default values are directly used for the position and size of a window. But, some design modification may be made to allow the user to alter other parameters than the above-discussed ones, such as the initial display position, the initial size, and the design of a window, and the cell type. In this case, when the user clicks control bar 46 on a window shown in Fig. 4, for example, the screen for setting and changing parameters is displayed. In accordance with what is displayed on this screen, parameters are set or changed and the set or changed parameters are stored in a text format in the parameter file.

In the example shown in Fig. 1 where symbol 4 is located in cell 1, if symbol 4 is to be shifted within cell 3, this symbol 4 should be moved in cell 3 by using the vector drawing function of the DLL of the OS. In this case, the relationship between symbol 4 and the action which is executed by specifying symbol 4 is not changed unless the name of the file to which symbol 4 is assigned is altered. Therefore, double-clicking symbol 4 on cell 3 will open the window of cell 5.

Although symbols in each cell are associated with parameter files in this embodiment, a function may be added which assigns a parameter file to a vector image (hereinafter called "button") independent of a cell and invoke an execution program in response to the double clicking of a button, in accordance with the parameter file associated with that button.

The following will discuss the process of preparing buttons, setting parameters and executing an execution program.

To prepare a button, the user determines the design of the button using the drawing function of the OS. The button may be an icon or a string of characters. To register an action which is to be executed upon clicking this button, the action setting mode is set to display the action setting screen.

Actions assignable to the button include the 1) open raster action, 2) open vector action, 3) program execution, 4) automatic scroll action, 5) layer display action, 6) sound generation action and 7) cell close action. The user selects and registers one or more actions. With regard to such actions as invoking of a cell, displaying a bit map and vector images, the parameter file name, image file name, music file name, etc. which are needed to execute the actions are designated.

Further, a button may be so designed as to be callable from a vector image in a cell via the associated parameter file.

This structure allows an application to be freely prepared by operating a button to invoke a new cell or manipulating a symbol in a cell to read the associated button.

Further, this button may be copied to or moved to another position in a tree diagram by using the editing function of the OS. In this case, the cell belonging to this button and the button are copied and moved at the same time.

According to this invention, as has been described above, a parameter file is assigned to a symbol or button, so that an action defined by the parameter is executed by specifying the symbol or button. It is therefore possible to associate a vector image with an action to easily prepare an application. Because an execution program merely executes a basic function, such as opening or closing a window, it needs a relatively small size so that the fast execution speed can be maintained.

Although a mouse is exemplified as an input device to point a vector image in this embodiment, another input device, such as a track ball or a joy stick, may be used as well. The display apparatus is not limited to CRT, but any other structure like LCD may also be used. This invention is not limited to the above-described embodiment, but may be modified and adapted in various other forms.

A program architecture suitable for achieving the present invention will now be described.

In short, this invention can allow a user to easily create high-grade applications and can also improve the program execution speed.

The architecture of the present invention is called a "bossless" architecture because every program module is on equal footing with other program modules. There is no module that controls the overall operation of the program (i,e., no boss). A comparison of the bossless architecture and the boss architecture is shown in Fig. 11. Fig. 11A is a schematic view of an application 150 based on the boss architecture. The architecture is in the form of a hierarchic structure, and a boss module 152 controls a plurality of modules, such as modules 154-157. Solid lines running from the boss to the individual modules are used to graphically depict the chains of command and linkage. When a program module in the lowest level (i.e., module 157 at the end of a branch) is executing, solid lines (i.e., links) 151, 153 and 158 from the boss to that program module must be maintained.

Fig. 11B is a schematic view of an application 160 based on the bossless architecture of the present invention. Application 160 comprises a plurality of program modules, such as modules 162-165. Each program module (called a "cell" in the present invention) is the same as the other cells in an hierarchical sense. Cells are linked together in a novel way in which no history or linkage information needs to be retained. Each link is independent. For example, there is no need for links to be active simultaneously. Each link is direct, i.e., two cells can be linked directly without the need of using one or more intermediate links. For example, cells 162 and 164 can be linked directly using line 166 instead of using lines 167 and 168 and passing through an intermediate cell. An application can be formed by defining the cells involved and using the novel link of the present invention. This is different from the situation in Fig. 11A where the link from the boss to the module at the lowest level must be active at all time while the module is executing. In Fig. 11B, dashed lines are used to graphically depict the novel interaction of the present invention.

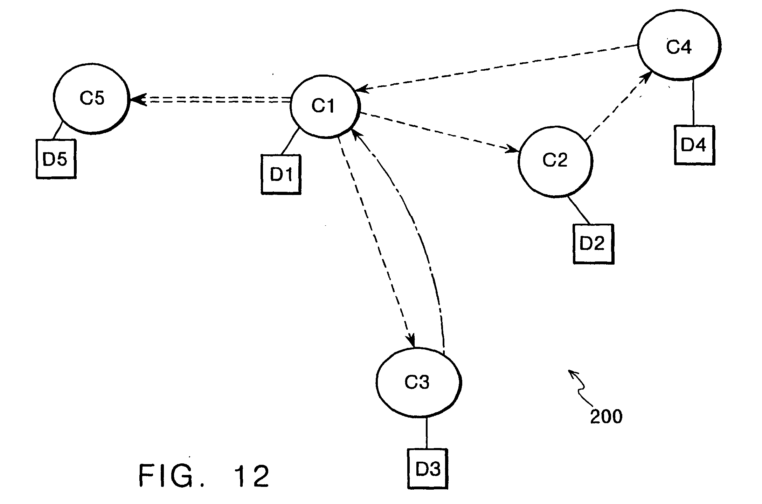

Fig. 12 is a drawing showing the structure of an application 200 using the bossless architecture of the present invention. Application 200 contains a plurality of cells, labeled as C1-C4, loaded and executing in RAM. Each cell has an associated file (labeled as D1-D4), called DNA file, which contains information of the cell. The term "DNA" is used here in analogy with the biological relationship between a living cell and its DNA. At a desired time, cell C1 can send statements (called "DSF statements") to cell C2 using a protocol called digital shifting function ("DSF") protocol. Cell C2 will execute these statements. The detail structures of cells, DNA files and the DSF protocol will be described below.

One important distinction of the present invention from conventional inter-process communication is that cell C2 does not retain information on the origin of these statements, i.e., no history of the inter-process communication is kept. Thus, once cell C1 completes its writing of DSF statements to cell C2, there is no further linkage between cells C1 and C2. Cell C2 does not know the origin of these statements during their execution. It is possible for cell C1 to later establish communication with cell C2 again by sending another set of statements to C2. However, this communication is separate from the previous communication, and terminates once the new set of DSF statements is sent.

Each of the cells can send DSF statements to any of the cells it desires. Thus, cell C1 can also send statements to cell C3. Similarly, cell C2 can send statements to cell C4, which in turn can send statements to cell C1. Cell C3 can also send statements to cell C1.

In this example, cells C1 and C2 are not bosses to C4. For example, when C4 is executing DSF statements, there is no need to maintain any links between cells C1 and C2 and between cells C2 and C4. Cell C4 has no obligation to report results of execution to any cells in application 200. Links are maintained only during the time DSF statements are transferred. Further, the writing of statements by cell C1 to cell C2 could be independent of the writing of statements by cell C2 to cell C4. In addition, cell C4 merely execute statements, and does not care where the statements come from. In Fig. 12, dashed lines are used to graphically depict the novel relationship between cells.

As pointed out above, one of the problems of the conventional architecture is that excessive amount of linkage information is retained, thereby slowing down the execution of programs. In the architecture of the present invention, there is no need to save and restore register values on a stack when cell C2 executes statements written by cell C1. There is no need to register cells in a central database prior to sending commands. There is no need to send messages back and forth to report status of execution. As a result, the application can be executed quickly.

Because there is practically no overhead in linking programs, it is possible to design an application using a large number of small cells. In a preferred embodiment, the size of the cells are small, e.g., typically about 10 kilobytes. The function of each cell is well defined and focused. As a result, there is flexibility in designing applications and the efficiency in execution improves.

A cell can also invoke another cell (e.g., cell C1 can invoke cell C5, as indicated by the double dashed line), if that cell is not already loaded and running in RAM. The invoked cell (i.e., cell C5) could be completely independent of the invoking cell (i.e., cell C1) after invocation. Thus, the invoking cell is not the boss of the invoked cell and the two cells are hierarchically at the same level. This is completely different from the prior art in which an invoking program module is at a hierarchical different level as the invoked program module.

As explained below, a cell can be implemented as an ".EXE" file (in the MS DOS or MS Windows environment), and can be loaded into RAM for execution using well known methods in accordance with the operating environment. The cell's associated DNA file can also be loaded into RAM. The invoked cell takes on the attributes stored in its DNA cell. It is also possible to modify the DNA file when the cell is invoked or while running by writing to the file (which could be an ASCII file). As a result, the architecture provide a flexible approach to build applications.

It can be seen from Fig. 12 that the bossless architecture has a flat structure instead of a hierarchical architecture of Figs. 22 and 11A. Each of the cells C1-C4 is an independent executable routine which is at the same hierarchical level as other executable routines. No cell functions as a boss for other cells. Consequently, this architecture is called a bossless architecture.

This architecture allows an application to start at any cell, Other cells can be invoked as needed. This architecture also allows an application to end at any cell. Because there is no chain to unwind, the cells can terminate immediately. There is no need to return to the "boss" program before exiting the application. In one embodiment of the present invention, a cell can exit the application at a predetermined time after invocation of a new cell. In another embodiment of the present invention, other cells can send a DSF statement to this cell requesting it to terminate.

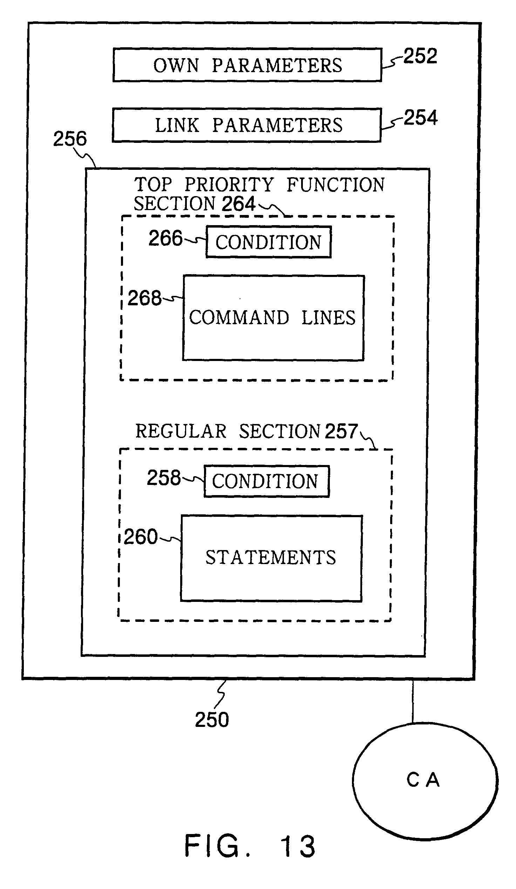

Fig. 13 is a block diagram showing the logic structure of a DNA file 250 associated with a cell, such as cell CA. File 250 has a section 252 containing parameters ("own parameters") related to the characteristics of cell CA itself. For example, section 252 may contain parameters related to the way cell CA manifest itself when invoked: the window size and background color of cell CA, the name of cell CA, the names of audio files associated with its invocation and termination, etc.

File 250 also contains a section 254 containing linking parameters ("link parameters") on cells related to cell CA. Examples of the parameters contained in this section are: the names, symbols and positions of the other cells. One of the parameter is "close," which is interpreted as closing cell CA when the cell associated with this parameter is invoked.

File 250 further contains a DSF information section 256. This section contains a regular statements section 257 and a top priority function section 264. The structure of the regular section 257 and top priority function section 264 are substantially the same, except that top priority function section 264 has a higher priority in statement execution. These two sections contain individual headers for identifying the sections (e.g., each section headed by a different name or symbol).

Regular section 257 contains a "condition" section 258 and a statements section 260. Statements section 260 comprises DSF statements sent to cell CA by other cells. Statements in statements section 260 are executed sequentially. Examples of statements are "Draw Circle," "Draw Line," and "Scrolling. " Each statement also contains parameters necessary for the execution of the statement (e.g., location and diameter of circles). Condition section 258 comprises three components: (a) a first pointer to the last DSF statement currently existing in statements section 260, (ii) a second pointer to the current DSF statement being processed by cell CA, and (iii) the current status of the cell. Examples of status are: ready, busy, lock, and never.

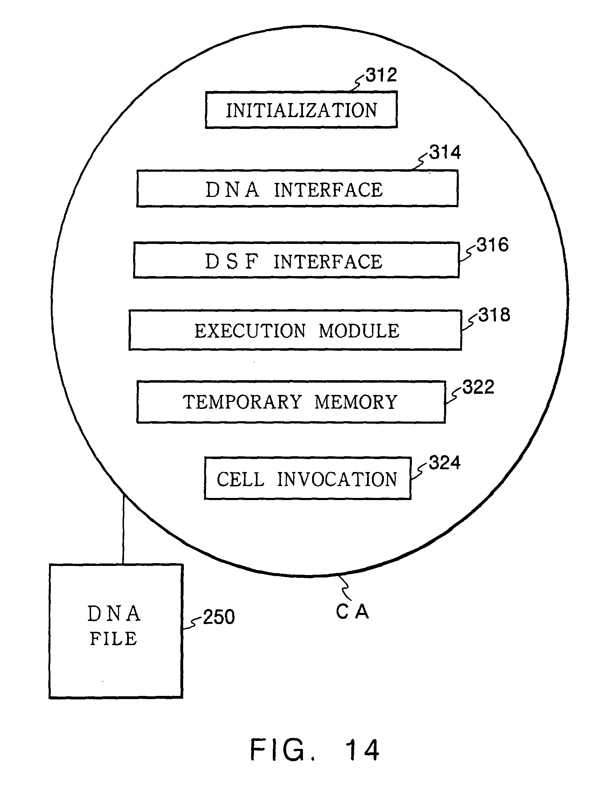

Top priority function section 264 contains a condition section 266 and a command lines section 268. The structure of condition section 266 is similar to the structure of condition section 258 (e.g., both sections contain two pointers). Command lines section 268 contains executable command lines which are sent by other cells using DSF (or similar) protocol. The command lines have a higher execution priority than the statements in statements section 260 (the details of execution priority will be discussed below in connection with Fig. 14). The command lines in command lines section 268 are executed sequentially. Examples of commands in section 268 are close, min (for minimizing a window), max (for maximizing a window), restore etc.

It should be appreciated that the logic structure shown in Fig. 13 can be implemented using one or more physical files. Further, portions of the logical sections may intermingle physically. In one embodiment of the present invention, the DNA file is a text file. Thus, the content of the DNA file can be modified by using a regular text editor.

Statements sent by one cell to another follow the DSF protocol. A sending cell (e.g., cell CS) sets up a communication link with the DNA file 250 associated with cell CA. Specifically, it looks up the address of DNA file 250 and determines whether DNA file 250 is able to accept DSF statements (e.g., at a "ready" state) by examining its status in condition section 258. Statements will be issued by cell CS only when cell CA is ready to accept them. In one embodiment, the issuance of statements involves writing ASCII characters (e.g., the ASCII characters for "Draw Circle") to statements section 260 of DNA file 250.
When cell CS is authorized to issue statements to cell CA, cell CS reads the first pointer (in condition section 258) to the last DSF statement to determine the appropriate address to write the DSF statements. It is important not to overwrite DSF statements already existed in cell CA. Cell CS writes DSF statements to statements section 260 of DNA file 250. Cell CS also updates the first pointer in condition section 258 so as to point to the last DSF statement newly written into statements section 260. The communication link between cells CA and CA is terminated. It can be seen that cell CA and DNA file 250 do not maintain record (i.e., history) indicated that these new statements originate from cell CS.

It should be appreciated that the above described DSF protocol is only an exemplary protocol. Other protocol could be used to write DSF statements to cells. For example, different pointer structures can be used, e.g., the first pointer can point to the position after the last DSF statement. Different types of status and different ways for checking status information can be used. Further, the statements could be stored in accordance with a logic structure instead of stored physically in a sequential manner. For example, the statements could be organized into groups with the address of each group pointed to by a pointer.

Command lines are sent by one cell to another using a protocol substantially the same as the DSF protocol. Because regular statements section 257 and top priority function section 264 have different headers, the sending cell can distinguish between these two sections and write to the appropriate section. Other means for identifying these two section can also be used (e.g., maintaining separate linked lists of statements and command lines).

Because DSF statements/commands are executed sequentially (either physically or logically), cell CA needs to complete execution of statements/commands (if any) preceding the above mentioned statements/commands written by cell CS. This set of previously written statements/commands are likely to be written by other cells (although it is also possible that it is written by cell CS in a prior communication link).

After the set of previously written statements/commands has been executed and prior to the execution of the statements/commands written by cell CS, cell CA does not have to take any action with respect to the cell which wrote the first set of statements/commands (e.g., no "return" is needed). This aspect of the present invention is different from conventional programming architecture.

Note that the communication link- between cells CA and CS can be terminated prior to the execution of the first statement/command sent by cell CS (for example, the previously written DSF statements/commands have not yet be executed completely when cell CS finishes sending DSF statements to cell CA). This is different from conventional linking in which communication link between two program modules is completed only after the task relating to these two modules is executed completely.

In a different embodiment of top priority function section 264, command lines section 268 allows only one command. In this embodiment, there is no need to have pointers. Thus, condition section 266 can be removed from top priority function section 264. Other cells can write a single command to top priority function section 264 because this section is separated from other sections by a header.

Fig. 14 shows the structure of cell CA. It is grouped logically into a plurality of sections, each implemented using instructions executable by a computer. Cell CA contains an initialization section 312 and a DNA interface section 314. DNA interface section 314 allows cell CA to read from and write to its corresponding DNA file 250. Initialization section 312 takes care of housekeeping tasks when invoked, including reading parameters from "own parameters" section 252 of DNA file 250. Cell CA also contains a DSF interface section 316 (for processing DSF protocol). This section contains code (or program instructions) for sending and receiving statements/command lines using the DSF protocol.

Cell CA contains an execution section 318 containing code for automatically executing statements and command lines in DNA file 250 written by other cells. The code sequentially read and execute statements in statements section 260 of DNA file 250. After each statement is executed, cell CA branch to top priority function section 259 and executes all the command lines therein. Cell CA then executes the next statement in statement section 260.

An example is used to illustrate the execution steps. In this example, statements section 260 contains two statements, "Draw Circle" and "Draw line," while the top priority function section 259 contains one command line, "Max". When cell CA reads a "Draw Circle" statement and its associated parameters, the code will perform a graphic algorithm for drawing a circle at an appropriate place with an assigned diameter (as determined by the associated parameters). Cell CA then branches to top priority function section 259 and executes the "Max" command, which causes a window associated with cell CA to enlarge. Cell CA returns to statements section 260 and executes the next statement, i.e., the "Draw Line" statement. Cell CA executes a graphic algorithm which draws a Line in accordance with the parameters associated with the "Draw Line" statement.

In the above example, if the command line in top priority function section 259 contains a "Close" command, cell CA will close itself. In this situation, the "Draw Line" statement will not be executed.

In one embodiment of the present invention, cell CA reads statements section 260 at predetermined times regardless whether statements are present in DNA file 250 (i.e., similar to a polling arrangement). In another embodiment of the present invention, a cell sends a signal to cell CA, either directly or indirectly (e.g., through an operating system), after sending statements to DNA file 250. Upon receiving the signal, cell CA executes the statements in statements section 260 until all the statements have been executed. Cell CA then waits for another signal. This embodiment is similar to an interrupt arrangement. Thus, the execution of statements is carried out automatically in both embodiments.

Cell CA contains a temporary memory section 322 for storing temporary information. As an example, it is possible to change attributes (e.g., background color and the size of the display window) of cell CA during its execution. In one embodiment of the present invention, the changed attributes are temporarily stored in temporary memory section 322 instead of immediately being written to DNA file 250. In this embodiment of cell CA, the attribute information stored in temporary memory section 322 is written into "own parameters" section 252 of DNA file 250 only when cell CA is terminated.

Cell CA also contains a cell invocation section 324 for invoking other cells. In one embodiment of the present invention, this section obtains information about the cell desired to be invoked and pass this information to a specialized cell which actually invoke the desired cell. It is also possible to incorporate the functionality of this specialized cell in the cell invocation section of cell CA and other cells.

It should be appreciated that the above mentioned sections in cell CA are grouped logically, and portions of these sections could intermingle physically.

It can be seen from the above described structures of cell CA and its associated DNA file 250 that both cell CA and DNA file 250 do not keep track of the origin of the DSF statements. A cell may accept DSF statements (stored in its associated DNA file) from many cells. After the DSF statements have been received, the linkage between the originating and destination cells is terminated. The cell executes DSF statements contained in its associated DNA file without knowledge of how the statements arrive the DNA file. As a result, there is no need to "return" to any cell.

Typically, the size of each cell is small and the function of the cell well defined. Consequently, the execution speed is fast. As a result of the small size and specialized function, the cells can be easily written to fully utilize the resources of a computer. The communication between cells using DSF is direct, with minimum amount of access to the operating system on which an application is run. As a result, the efficiency is high.

The architecture of the present invention comprises at least two cells which can communicate with each other, The cells are encapsulated program modules that are specialized for their designed tasks. Therefore, applications developed using the present architecture comprise of multiple executable which can run independently or concurrently. The cells interact with each other using the inventive DSF protocol. Each cell can control the action of other cells. For example, a first cell can control a second cell, and the second cell can control the first cell. Therefore,no single cell has complete control over the other cells, or in other words, there is no boss. On the other hand, under conventional architectures, program modules subordinate to a boss cannot control the boss. Another unique characteristic of the present architecture is that the cell that receives a command does not keep any information of where the command came from. This lack of historical knowledge allows cells to move forward instead of going backward in a link.

The technology of the present invention is called the "digital cell technology" because the structure of program modules and the interaction between them are similar to biological cells. Some of the similarities are listed here: (i) an application is made up of many cells dynamically interacting with each other, (ii) many cells can be active sit a time, (iii) the interaction of a pair of cells can be independent of interaction of other pairs of cells, (iv) control is distributed instead of centralized, and (v) each cell is associated with a DNA structure which guides the behavior of the cell.

One of the embodiments of the present invention is a multimedia application development system which runs under Microsoft's MS Windows. In this environment, cells are programs stored as ".EXE" files and typically show a window on a computer monitor when invoked, By linking these cells, a user can construct an application software just like assembling blocks. Each cell, with its specific function, is given another function or value through DSF protocol with other cells to produce a variety of applications.

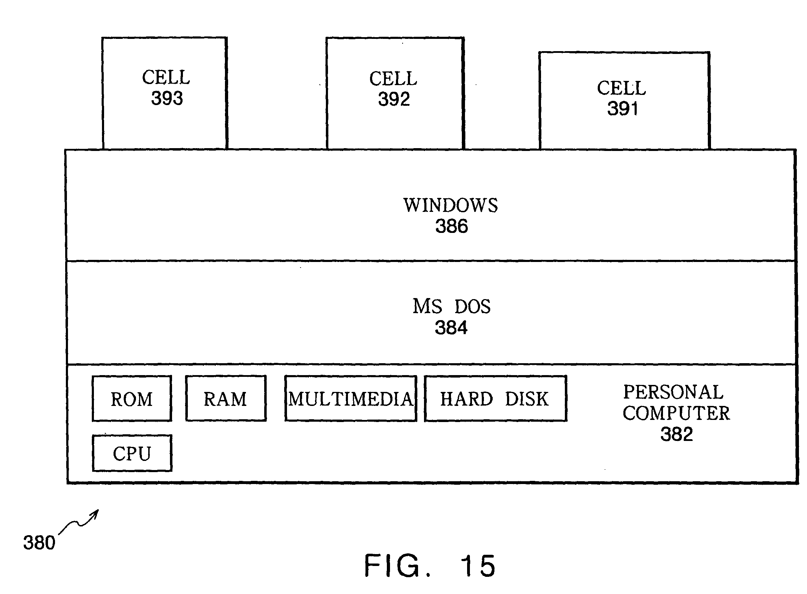

Fig. 15 shows a block diagram of a computer system 380 running the above described application development system. Computer system 380 comprises a personal computer 382, such as an IBM compatible computer. Personal computer contains components such as a CPU, RAM, ROM, hard disk and multimedia device (e.g., sound card, CD-ROM reader, video card, etc.). Personal computer is loaded with a MS-DOS 384 and a MS Windows 386. Cells 391-393 of the present invention run on top of MS Windows 386. Some of these cells can be graphically displayed on a display device and played on a sound card of personal computer 382.

An exemplary list of cells which run under MS Windows environment together with a description of their functions is given below:

| NAME | DESCRIPTION |
|---|---|
| BUTTON | Creates buttons with action attributes assigned to them. |
| VIDEO | Enables video file (AVI) playback. |
| CONTENTS | Displays text files (TXT) (text editor with ability to adding action attributes to the text). |
| VISUAL | Enables display of BMP, DXP, TITF, WRI, and TXT files with dynamic 360-degree free scrolling, multiple layer support, raster and vector overlays, and object overlays with action attributes assigned. |
| NAKAMA | Enables more than one VISUAL cells to be linked using coordinates. Enables images in two VISUAL cells to be interlocked using an interlinked window (bird's eye view). |
| RUN | DNA file editor and DNA file executor. Enables continuous reproduction of applications. This cell serves as the specialized cell, mentioned above, for invoking other cells. |
| COPY | Performs file copying. |
| TITLE | Executes Title Bar functions. |
| RESTART | Provides user selection to exit or restart the operating system. |
| PLAYWAV | Enables sound file (WAV) playback. |
| AREA | Manipulates the attributes of graphics written in the VISUAL cell. |
| LIST | Enables objects/layers to be grouped and provides instant access to the defined grouping. |

These cells are stored in memory (e.g., floppy and/or hard disk) as ".EXE" files. To effectively allocate system resources for simultaneous activation of more than one cell, the sizes of most cells are around 10 kilobytes. The exception is the VISUAL cell which is about 100 kilobytes.

A simplified example will be used to illustrate the system. Only one type of cell, the visual cell, described above, is used in this example. In this example, the system makes use of the resources of MS Windows. For example, the invocation of a cell (e.g., loading of an appropriate file as a result of clicking on an icon) and the graphic user interface (e.g., the manipulation of windows such as resizing, drag and drop, etc.) are handled by MS Windows.

The multimedia application development system needs to be installed in MS Windows. The installation involves loading files of bitmaps, cells, sound, video, etc. from removable storage media (e.g., floppy CD-ROM, etc.) to appropriate directories in the hard disk of the computer. Programs are linked to MS Windows and icons are placed at appropriate positions. Thus, a user can invoke the development system by clicking on an icon under MS Windows. Once the development system is running, various cells can be invoked by clicking on icons associated with the cells.

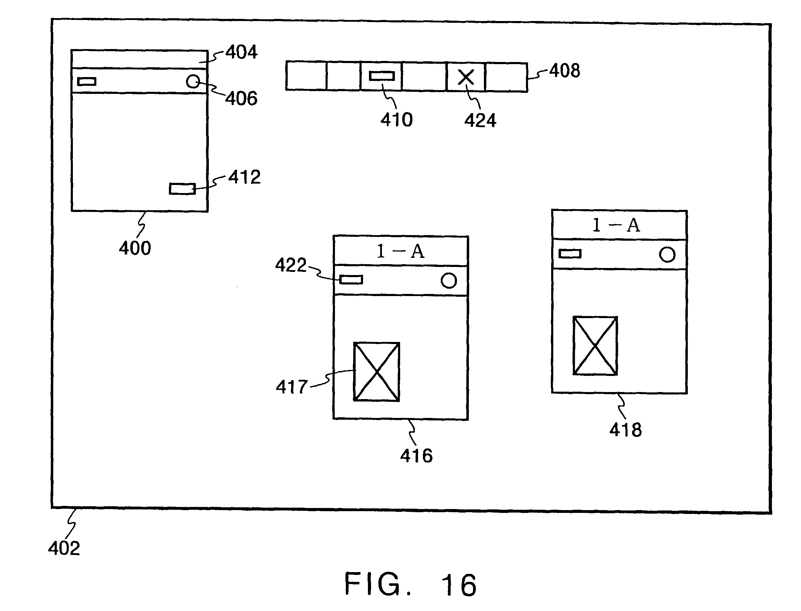

Fig. 16 shows a window 400 representing a first visual cell displayed on a display screen 402 under the control of MS Windows 386. Window 400 typically contains a graphic image (not shown) and a title bar 404. A user can click on an icon 406 in windows 400, and a side bar 408 is displayed. Side bar 408 contains spaces for displaying icons allowing the user to add functionalities to the first visual cell associated with window 400.

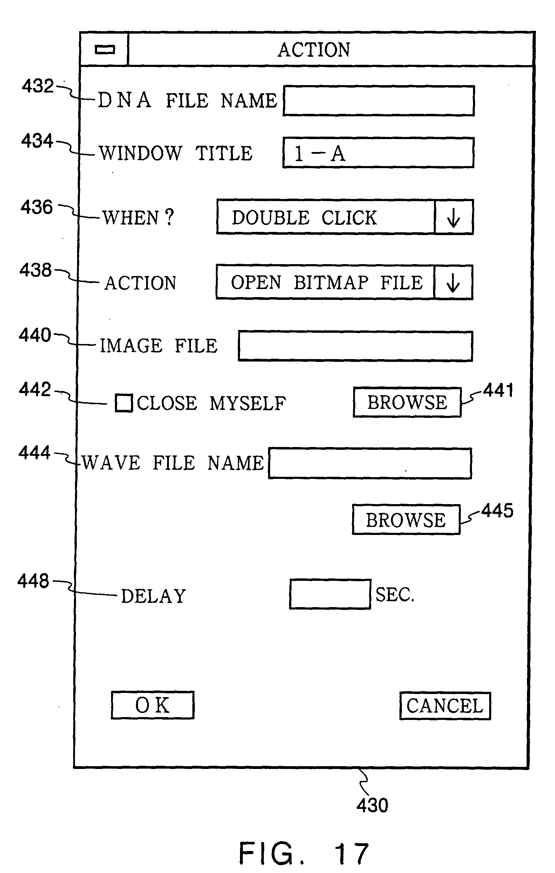

One of the spaces of side bar 408 contains an icon 410 for allowing a user to attach an icon for invoking a second visual cell to window 400. After the user clicks on icon 410, a symbol helps the user to place an icon 412 inside window 400 for representing the second visual cell. A window 430, shown in Fig. 17, then appears which allows the user to define the characteristics of the second visual cell. Side bar 408 also contains an icon 424 which allows the user to delete a visual cell placed inside window 400.

Window 430 contains a line 432 for the user to enter the name of a DNA file associated with the second visual cell. The information entered in window 430 will be stored in this DNA file. Window 430 also contains a line for the user to enter the title of a graphic window showing the second visual cell. In Fig. 17, the title "1-A" is entered in line 434. A line 436 allows the user to select the mode of invoking the second visual cell. In window 430, "double click" is selected, indicating the second visual cell is invoked upon double clicking on icon 412.

Window 430 contains a line 438 allowing the user to define the action of the second visual cell. In Fig. 17, the action selected is "open bitmap file. Thus, the action performed by the second visual cell is to open a bitmap file. A line 440 allows the user to enter an image file to be opened when the second visual cell performs its action. Window 430 contains a "browse" button 441 so as to allow the user to search for image files already stored in the computer for the purpose of entering an appropriate file in line 440. Window 430 also contains a "close myself' box 442. When selected, the first visual cell will be closed automatically when the second visual cell is invoked. This is implemented by attaching a "close" parameter to a line in the linking parameter of the DNA file associated with the first visual cell which links the first and the second visual cells.

In this embodiment, lines 440-442 are associated with the action line 438. If the action selected is "close visual cell" instead of "open bitmap file," lines 440 would be changed to allow the user to enter the DNA file of a visual cell selected to be closed after invocation of the second visual cell. In this embodiment, the second visual cell sends a "quit" DSF statement to the designated visual cell after invocation for the purpose of closing that cell.

It is possible to use window 430 to input a variety of actions to be performed by the second visual cell. The two examples above are for illustrative purposes only.

Window 430 contains a line 444 which allows the user to enter an audio file associated with the invocation of the second visual cell. Window 430 contains a "browse" button 445 so that the user can search for audio (typically having an extension of"WAV") files already stored in the computer for the purpose of entering an appropriate file in line 444.

Window 430 contains a line 448 allowing the user to enter a delay. This parameter allows the second visual cell to manifest itself a predetermined time interval after icon 412 is clicked on.

It should be appreciated that the format of and information requested by window 430 is exemplary. Depending on the design objective and creativity of a programmer, window 430 could have other formats and request different types of information. When window 430 is closed (after all essential information has been entered by the user), the information contained therein is stored in the DNA file indicated on line 432. In this embodiment, the DNA file is an ASCII text file stored in the hard disk.

When a user clicks on icon 412, a window 416 is opened to represent one instance of the second visual cell. Window 416 has characteristics defined by its associated DNA file. For example, window 416 contains the title "1-A" (as determined from line 434 of window 430) and a graphic image 417 associated with the image file defined in line 440. The position of window 416 can be moved around using normal MS Windows methods (i.e., drag and drop). When a user clicks on icon 412 again, another window 418 of the second visual cell appears simultaneously with window 416. In this case, two copies of the second visual cell are loaded into the RAM, each is associated with the same DNA file.

It is possible to terminate the first visual cell while the second visual cell is active. In Fig. 16, each visual cell window has a "close" button, such as button 422 in window 416, for allowing the user to close the window. In the development system shown in Fig. 16, the user can close window 400 associated with the first visual cell while windows 416 and 418 continue to be active on display screen 402.

It is also possible to close window 400 using a statement issue by the second visual cell. As explained before, line 438 of Fig. 17 can be set to "close visual cell" and the name of the visual cell is set to the first visual cell. When the second visual cell is invoked, it will send a DSF statement to the DNA file associated with the first visual cell for the purpose of closing the first visual cell.

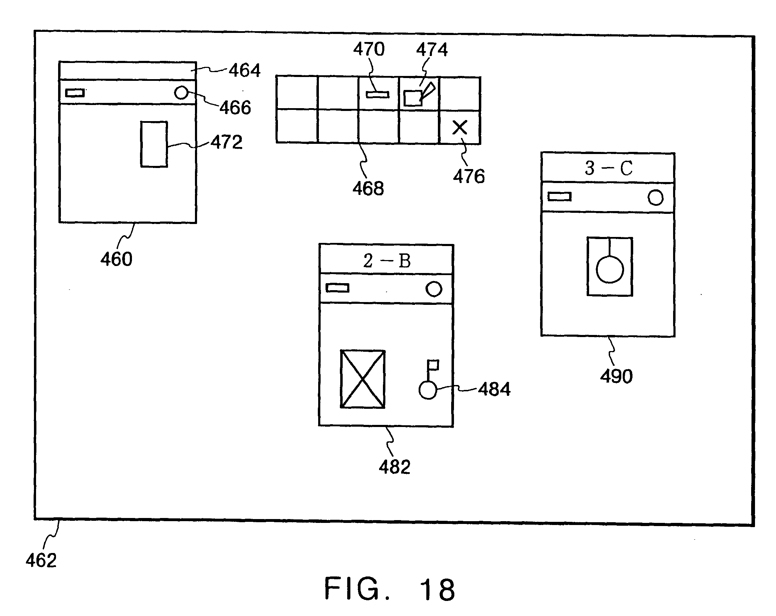

An example showing two cells of different types, a visual cell and a button cell, is described below. Fig. 18 shows a window 460 representing a button cell displayed on a display screen 462 under the control of MS Windows 386 of Fig. 15. Window 460 contains a title bar 464. A user can click on an icon 466 in window 460 and a side window 468 is displayed. Side window 468 contains spaces for displaying icons allowing the user to add buttons to, and remove buttons from, window 460.

One of the spaces of side window 468 contains an icon 470 for allowing a user to attach a button to window 460. After the user clicks on icon 470 in side window 468, a symbol appears to help the user to place a button 472 at a desired position inside window 460. This new button can later be clicked on by the user and a sequence of user-defined activities will occur. Side window 468 also contains an icon 476 which allows the user to remove an existing button inside window 460.

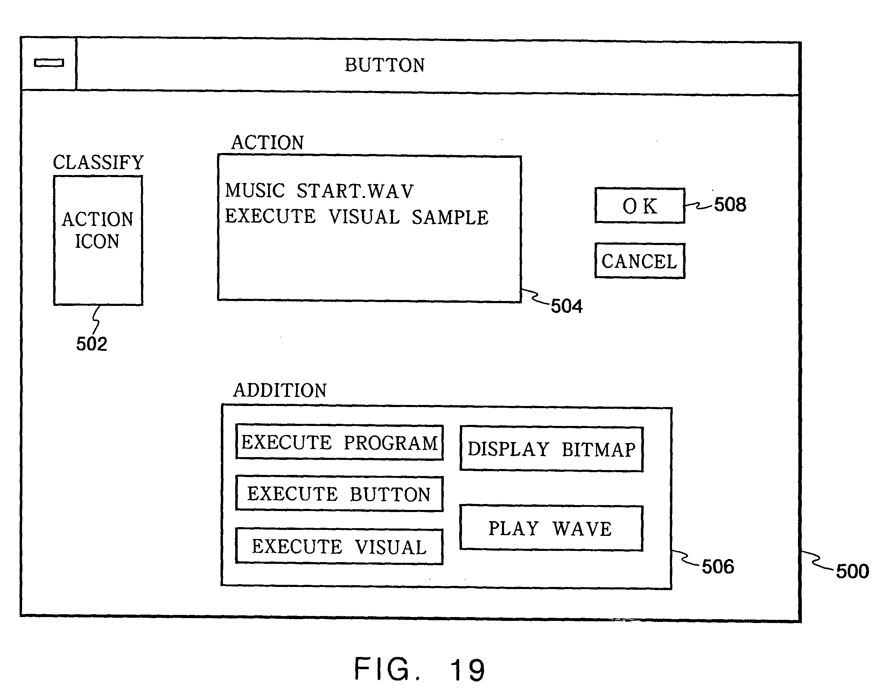

The user can then click on another icon 474 in side window 468 which opens a windows 500, shown in Fig. 19, allowing the user to define the characteristics of button 472. Window 500 contains an area 502 showing a list of items for allowing the user to select the types of information to be entered into window 500. For example, selection of'action" allows the user to enter the actions to be taken by button 472 when it is invoked while selection of "icon" allows the user to choose an icon to represent the button cell instead of using a simple rectangular button. The list may contain other items. Depending on the choice of item in the list, the appearance of, and information requested by, window 500 will be different.

In an area 502 showing a list, "action" is selected. As a result of such choice, an "action" window 504 and "addition" window 506 are displayed. Action window 504 shows the actions of button 472 when invoked. The content of action window 504 is selected by user using addition window 506.

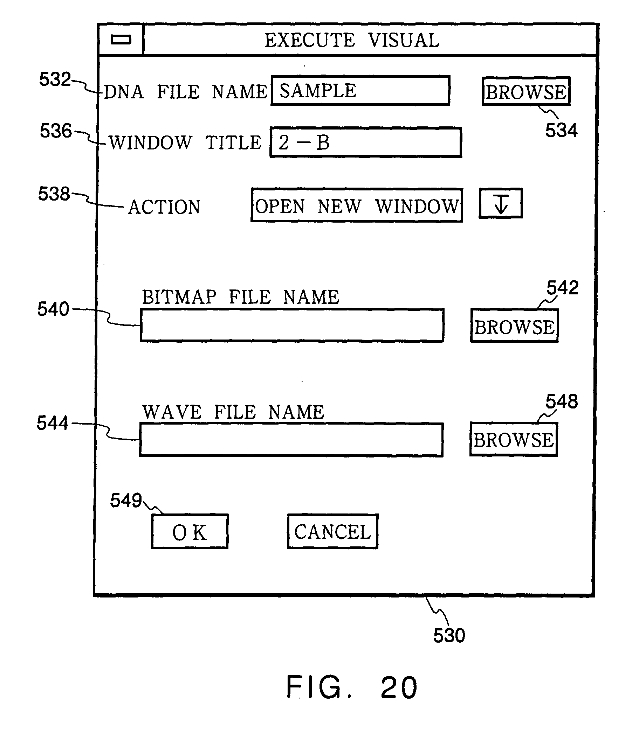

Addition window 506 contains a plurality of actions, such as "execute program," "execute button, " "execute visual," "play wave," and "display bitmap." The user can click on any one of these actions and a window for allowing the user to further define the action will be displayed. An example of such a window for "execute visual" is shown in Fig. 20. The user can select one or more actions in addition window 506.

The selected action is displayed on action window 504. For example, action window 504 contains a line "MUSIC START. WAV" indicating that the "play wave" action in addition window 506 has previously been selected. A window associated with "play wave" (not shown) allows the user to indicate that an audio file named "START.WAV" should be played. Action window 504 also contains a line "EXECUTE VISUAL SAMPLE" indicating that the "execute visual" action in addition window 506 has previously been selection. When the user clicks on an "OK" button 508, the information entered in window 500 is stored in a DNA file associated with this button cell.

The specification of visual cell SAMPLE is now described. A window 530 of Fig. 20 shows the type of information requested upon selecting the "execute visual" action of addition window 506. Window 530 contains a line 532 for the user to enter the DNA file of the visual cell desired to be invoked. In this case, the name is "SAMPLE" which corresponds to the "Execute VISUAL" line in action window 504. Window 530 contains a "browse" button 534 in case the user needs to find a list of preexisting DNA filename. Window 530 also contains a line 536 for the user to enter the title of the visual cell window. In this case, the title is "2-B." Window 530 contains a line 538 for allowing the user to enter the action desired. Examples of actions are "open new window," "open new vector," "open new movie," etc. The content of the next line in window 530, line 540, depends on the selection in line 538. In this example, line 540 allows the user to enter the name of a bitmap file because the action in line 538 is "open new window." If the action in line 538 is "open new vector" or "open new movie," line 540 will request the name of a vector file or a video file, respectively. Window 530 contains a "browse" button 542 allowing the user to find a desired preexisting bitmap file. Window 530 contains a line 544 allowing the user to enter an audio file when the visual cell is invoked. Window 530 contains a "browse" button 548 allowing the user to select a desired preexisting WAV file. When the user clicks on an "OK" button 549, the information entered in window 530 will be used to specify the selected visual cell associated with button 472. This information, along with the rest of the information entered in window 500, will later be stored in the DNA file of button 472.

When all the information relating to button 472 has been entered and stored, button 472 can be invoked. Returning now to Fig. 18, side window 468 can be removed by clicking on icon 466. Removing side window 468 changes window 460 from an edit mode (for allowing users to add, modify and remove buttons) to an active mode (for allowing users to invoke buttons in window 460). In this embodiment, button 466 acts as a toggle for displaying and removing side window 468. After side window 468 is removed, the user can click on button 472 to invoke its associated actions: play a piece of music and display a window 482 corresponding to visual cell SAMPLE. The title of SAMPLE's window is "2-B", which corresponds to line 536 of Fig. 20. In this example, window 482 contains an icon 484 which allows another visual cell to be invoked. This icon 484 has been previously placed in visual cell SAMPLE in a manner similar to the operation discussed above in connection with Fig. 16. The user can click on icon 484 to display another window 490 corresponding to a different visual cell.

It should be appreciated that the format of and information requested by windows 500 and 530 is exemplary. Depending on the design objective and creativity of a programmer, windows 500 and 530 could have other formats and request different types of information.

Another example of an application running under the system of Fig. 15 is a hotel index system displayed on the screen of a computer. The application can be formed by assembling a collection of cells. Any of the cells can be invoked first. For example, a user of the application can invoke (e.g. by clicking on) a cell which is designed to show a window containing the index. Another cell becomes active when a user clicks on an item in the index window. This new cell display itself as another window that shows a regional map. The user can click on an item on the map window to activate a third cell, which includes text or pictures in its display. In this way, more than one cell is active simultaneously, creating an application program.

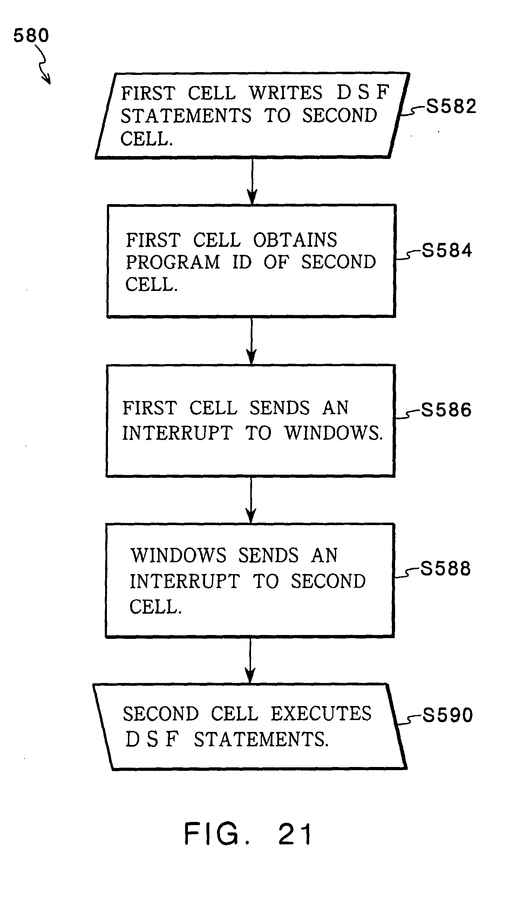

As mentioned above, in one embodiment of the present invention, a cell can indirectly notify another cell after writing DSF statements thereto. Fig. 21 is a flow chart 580 showing an embodiment of indirect notification of cells. In this example, MS Windows 386 of Fig. 15 assigns a program identification to each program (including the cells) running on it. After a first cell writes a set of DSF statements to a DSF file of a second cell (step S582), it obtains the program identification of the second cell (step S584). The first cell sends an interrupt to MS Windows 386 requesting it to send an interrupt to the second cell (step S586). In response to this request, MS Windows 386 sends an interrupt to the second cell (step S588). The second cell then executes the DSF statement previously written to its associated DNA file (step S590).

It should be appreciated that the MS Windows in the above flow chart is merely an example of an operating system. Other operating systems, such as MS DOS and Macintosh OS, can be used to perform the interrupt in place of MS Windows.

## Claims

1. A method of operating a computer to execute an application program in a window-based environment, whereby program modules are being linked to form the application program, **characterized in that**
each of that modules (CA) controls a window and has a file (250) to be executed by the module (CA),
and **in that** a first module can write commands (DSF)into the file (250) of a second module, which commands will then be carried out by said second module without initiating communication with said first module.

2. The method of claim 1 **characterized in that**
a first program module (CA), when invoked, retrieves from its associated - first - file (250), a first media file (252) contained therein thereby creating a first media presentation, and invoking a second program module,
said second program module (CA) when invoked, retrieves a second media file (252) contained in its associated - second - file thereby creating a second media presentation, and
said second program module terminates without informing that first program module.

3. The method of claim 2 **characterized in that**
each of that first and second files has a first section (260,268) for receiving commands said by other program modules (CA),
said second program module (CA) contains a program instruction (316) for sending a first set of commands to said first file;
said first program module (CA) contains program instructions (318) for automatically executing said first set of commands without returning an execution result to said second program module (CA), said first program module further containing program instructions (316) for sending a second set of statements to said second file;
and said second program module contains program instructions (318)for automatically executing said second set of commands without returning execution result to said first program module.

4. The method of claim 3, **characterized in that** said first file comprises
a first section (260,268) for receiving commands sent by other program modules, and
a second section (258,266) containing indicia of status of said first file,
and **in that** said second program module examining said indicia prior to sending said first set of commands.

5. The method of claim 4 **characterized in that** said second section contains a first pointer (a) associated with one of said commands in said first file, said first pointer being changeable for reflecting addition of said first set of commands to said first file.

6. The method of claim 5 **characterized in that** said second section further contains a second pointer (ii) pointing to a command **in that** first file which is currently being executed by that first program module (CA).

7. The method of claim 4 **characterized in that** said indicia has at least a first status and a second status, said first status indicating that said first file is ready to accept new commands, and said second status indicating that said first file is not able to accept new commands, and said second status indicating that said first file is not able to accept new commands.

8. The method of claim 4 **characterized in that** the first file further comprises a set of parameters (252) relating to characteristics of said first program module (CA), and said first program module contains program instructions (312) for using said parameters when said first program module is invoked.

9. An apparatus including a computer executing, in a window-based environment, an application program being comprised of linked program modules, **characterized in that**
each of said program modules (CA) being adapted to control a window and has associated thereto a respective file (250) containing commands (in 260 and 268) to be executed by the module,
and **in that** a first module (CA) is adapted to write commands into the file (250) of a second module (CA) for being executed by the same without initiating communication with said first module.

10. The apparatus according to claim 9 **characterized by** comprising
a plurality of media files (bitmap files, wave files),
and by at least one of said files (250) associated to a first one of said program modules (CA) including references to at least a first one of that media files and to at least a second program module for creating a respective first media presentation, and for invoking a second program module (CA), upon invoking said first program module (CA),
the file associated to said second program module (CA) including a reference to a second one of said media files for creating a respective second media presentation,
and by means for terminating said second program module without informing said first program module.

11. The apparatus of claim 10 **characterized in that** said program module associated files (250) each have a first section (260,268) for receiving commands sent by other program modules (CA),
said second program module (CA) containing program instructions (316,318) for sending a first set of commands to the file associated to said first program module (CA),
said first program module (CA) containing program instructions for automatically executing said first set of commands without returning execution results to said second program module, said first program module further containing program instructions for sending a set of commands (316,318) to the file associated to said second program module
and said second program module containing program instructions (318) for automatically executing said second set of commands without returning results of execution to said first program module.

12. The apparatus of claim 11 **characterized by** the file (250) associated to said first program module, comprising a second section (258,266) containing indicia of status of that file for being examined by that second program module prior to sending that first set of commands (DSF).

13. The apparatus of claim 12 **characterized in that** said second section additionally contains a first pointer (a) associated with one of said commands in said file, said first pointer being changeable for reflecting addition of that first set of commands to said file.

14. The system of claim 13 **characterized in that** said second section further contains a second pointer (i) pointing to a statement in said file which is currently being executed by said first program module (CA).

15. The apparatus of claim 12 **characterized in that** said indicia has at least a first status (ready) and a second status (busy), said first status indicating that said file is ready to accept new commands and said second status indicating that said file is not able to accept new statements.

16. The apparatus of claim 12 **characterized by** the file associated to that first program module further comprising a set of parameters (312) relating to characteristics of said first program module (CA) which module contains program instructions for using said parameters when being invoked.

## Patentansprüche

1. Verfahren zum Betreiben eines Computers für die Ausführung eines Anwenderprogramms in einer auf Window basierenden Umgebung, wobei Programm-Module zur Bildung des Anwenderprogramms miteinander verknüpft sind, **dadurch gekennzeichnet,**
**dass** jedes Modul (CA) ein Fenster steuert und eine vom Modul (CA) zu verarbeitende Datei (250) hat,
und **dass** ein erstes Modul Befehle (DSF) in die Datei (250) eines zweiten Moduls einschreiben kann, die dann vom zweiten Modul ausgeführt werden, ohne eine Kommunikation mit dem ersten Modul aufzubauen.

2. Verfahren nach Anspruch 1, **dadurch gekennzeichnet, dass** ein erstes Programm-Modul (CA) bei Aufruf aus seiner zugehörigen - ersten - Datei (250) eine darin enthaltene erste Mediendatei entnimmt und so eine erste Medienpräsentation kreiert und ein zweites Programm-Modul aufruft,
dass das zweite Programm-Modul (CA) bei Aufruf eine in seiner zugehörigen - zweiten - Datei enthaltene zweite Mediendatei (252) entnimmt und auf diese Weise eine zweite Medienpräsentation kreiert,
und dass das zweite Programm-Modul ohne Rückmeldung an das erste Programm-Modul endet abschließt.

3. Verfahren nach Anspruch 2, **dadurch gekennzeichnet, dass** sowohl die erste als auch die zweite Datei einen ersten Abschnitt (260,268) zur Aufnahme von Befehlen seitens anderer Programm-Module (CA) hat,
dass das zweite Programm-Modul (CA) eine Programminstruktion (326) zum Senden eines ersten Befehlssatzes an die erste Datei enthält,
dass das erste Programm-Modul (CA) Programminstruktionen (318) zur automatischen Durchführung des ersten Befehlssatzes ohne Rückmeldung eines Ausführungsergebnisses an das zweite Programm-Modul (CA) enthält und dass das erste Programm-Modul weiterhin Programminstruktionen (316) zum Aussenden eines zweiten Satzes von Anweisungen an die zweite Datei enthält,
und dass das zweite Programm-Modul Programminstruktionen (318) zur automatischen Durchführung des zweiten Befehlssatzes ohne Rückmeldung des Ausführungsergebnisses an das erste Programm-Modul enthält.

4. Verfahren nach Anspruch 3, **dadurch gekennzeichnet, dass** die erste Datei enthält:
einen ersten Abschnitt (260,268) zur Aufnahme von seitens anderer Programm-Module gesendeter Befehle,
einen zweiten Abschnitt (258,266), der Angaben über den Status der ersten Datei enthält,
und dass das zweite Programm-Modul die Angaben vor dem Aussenden des ersten Befehlssatzes prüft.

5. Verfahren nach Anspruch 4, **dadurch gekennzeichnet, dass** der zweite Abschnitt einen ersten Zeiger (a) enthält, welcher zu einem der Befehle in der ersten Datei gehört und welcher veränderbar ist, um das Hinzufügen des ersten Befehlssatzes zur ersten Datei erkennen zu lassen.

6. Verfahren nach Anspruch 5, **dadurch gekennzeichnet, dass** der zweite Abschnitt weiterhin einen zweiten Zeiger (ii) enthält, der auf einen Befehl in der ersten Datei zeigt, der gerade vom ersten Programm-Modul (CA) ausgeführt wird.

7. Verfahren nach Anspruch 4, **dadurch gekennzeichnet, dass** die Angabe mindestens einen ersten und einen zweiten Status haben, von denen der erste Status anzeigt, dass die erste Datei bereit zur Annahme neuer Befehle ist, und der zweite Status anzeigt, dass die erste Datei keine neuen Befehle annehmen kann.

8. Verfahren nach Anspruch 4, **dadurch gekennzeichnet, dass** die erste Datei weiterhin einen Satz Parameter (252) umfasst, welche sich auf Charakteristika des ersten Programm-Moduls (CA) beziehen, und dass das erste Programm-Modul Programminstruktionen (312) für die Verwendung der Parameter bei aufgerufenem ersten Programm-Modul enthält.

9. Vorrichtung mit einem Computer, der in einer auf Window basierenden Umgebung ein Anwenderprogramm ausführt, das miteinander verknüpfte Programm-Module enthält, **dadurch gekennzeichnet, dass**
jedes der Programm-Module (CA) geeignet ist, ein Fenster zu steuern, und ihm eine jeweilige Datei (250) zugeordnet ist, welche vom Modul auszuführende Befehle (in 260 und 268) enthält,
und dass ein erstes Modul (CA) sich eignet zum Schreiben von Befehlen in die Datei (250) eines zweiten Moduls (CA), welche von diesem zu verarbeiten ist, ohne eine Kommunikation mit dem ersten Modul zu beginnen.

10. Vorrichtung nach Anspruch 9, **dadurch gekennzeichnet, dass**
eine Mehrzahl von Mediendateien (Bitmap-Dateien, Wave-Dateien) vorgesehen sind,
und dass mindestens eine dieser Dateien (250), die einem ersten der Programm-Module (CA) zugeordnet ist, Verweise auf mindestens eine erste der Mediendateien und mindestens ein zweites Programm-Modul enthält zur Bildung einer entsprechenden ersten Mediendarstellung und zum Aufrufen eines zweiten Programm-Moduls (CA) nach dem Aufrufen des ersten Programm-Moduls (CA),
dass die dem zweiten Programm-Modul (CA) zugeordnete Datei einen Verweis auf mindestens eine zweite der Mediendateien zur Bildung einer entsprechenden zweiten Mediendarstellung enthält, und dass Mittel zum Beenden des zweiten Programm-Moduls ohne Rückmeldung an das erste Programm-Modul vorgesehen sind.

11. Vorrichtung nach Anspruch 10, **dadurch gekennzeichnet, dass** die den Programm-Modulen zugeordneten Dateien (250) jeweils einen ersten Abschnitt (260,268) zur Aufnahme von seitens anderer Programm-Module (CA) gesendeter Befehle haben,
dass das zweite Programm-Modul (CA) Programminstruktionen (316,318) zum Senden eines ersten Befehlssatzes an die dem ersten Programm-Modul (CA) zugeordnete Datei enthält,
dass das erste Programm-Modul (CA) Programminstruktionen zur automatischen Durchführung des ersten Befehlssatzes ohne Rückmeldung der Durchführungsergebnisse an das zweite Programm-Modul enthält, dass das erste Programm-Modul weiterhin Programminstruktionen zum Senden eines Befehlssatzes (316,318) an die dem zweiten Programm-Modul zugeordnete Datei enthält,
und dass das zweite Programm-Modul Programminstruktionen (318) zur automatischen Durchführung des zweiten Befehlssatzes ohne Rückmeldung der Durchführungsergebnisse an das erste Programm-Modul enthält.

12. Vorrichtung nach Anspruch 11, **dadurch gekennzeichnet, dass** die dem ersten Programm-Modul zugeordnete Datei (250) einen zweiten Abschnitt (258,266) enthält, welcher Angaben über den Status dieser Datei zur Prüfung durch das zweite Programm-Modul vor dem Aussenden des ersten Befehlssatzes (DSF) enthält.

13. Vorrichtung nach Anspruch 12, **dadurch gekennzeichnet, dass** der zweite Abschnitt außerdem einen ersten Zeiger (a) enthält, welcher einem der Befehle in dieser Datei zugeordnet ist und welcher änderbar ist, um die Hinzufügung des ersten Befehlssatzes zu der Datei erkennen zu lassen.

14. System nach Anspruch 13, **dadurch gekennzeichnet, dass** der zweite Abschnitt weiterhin einen zweiten Zeiger (i) enthält, welcher auf einen Zustand in der Datei zeigt, die momentan durch das erste Programm-Modul (CA) verarbeitet wird.

15. Vorrichtung nach Anspruch 12, **dadurch gekennzeichnet, dass** die Angaben mindestens einen ersten Status (Bereit) und einen zweiten Status (Belegt) haben, von denen der erste Status anzeigt, dass die Datei bereit zur Annahme neuer Befehle ist, und der zweite Status anzeigt, dass die Datei keine neuen Befehle annehmen kann.

16. Vorrichtung nach Anspruch 12, **dadurch gekennzeichnet, dass** die dem ersten Programm-Modul zugeordnete Datei weiterhin einen Satz von Parametern (312) umfasst, welche sich auf Charakteristika des ersten Programm-Moduls (CA) beziehen, der Programminstruktionen zur Verwendung dieser Parameter bei Aufruf enthält.

## Revendications

1. Procédé de fonctionnement d'un ordinateur pour exécuter un programme d'application dans un environnement à base de fenêtres, moyennant quoi les modules de programme sont liés pour former le programme d'application, **caractérisé en ce que** :
chacun de ces modules (CA) contrôle une fenêtre et a un fichier (250) qui doit être exécuté par le module (CA),
et **en ce qu'**un premier module peut écrire des commandes (DSF) dans le fichier (250) d'un deuxième module, lesquelles commandes seront ensuite exécutées par ledit deuxième module sans établir de communication avec ledit premier module.

2. Procédé selon la revendication 1, **caractérisé en ce que**
un premier module de programme (CA), lorsqu'il est appelé, récupère dans son -premier- fichier associé (250), un premier fichier de contenu multimédia (252) qui s'y trouve créant ainsi une première présentation de contenu multimédia, et appelant un deuxième module de programme,
ledit deuxième module de programme (CA) lorsqu'il est appelé, récupère un deuxième fichier de contenu multimédia (252) contenu dans son - deuxième - fichier associé, créant ainsi une deuxième présentation de contenu multimédia, et
ledit deuxième module de programme s'arrête sans informer ce premier module de programme.

3. Procédé selon la revendication 2, **caractérisé en ce que**
chacun de ces premier et deuxième fichiers a une première section (260, 268) pour recevoir des commandes données par d'autres modules de programme (CA),
ledit deuxième module de programme (CA) contient une instruction de programme (316) pour envoyer un premier jeu de commandes au dit premier fichier ;
ledit premier module de programme (CA) contient des instructions de programme (318) pour exécuter automatiquement ledit premier jeu de commandes sans renvoyer de résultat d'exécution au dit deuxième module de programme (CA), ledit premier module de programme contenant en outre des instructions de programme (316) pour envoyer un deuxième jeu d'instructions au dit deuxième fichier ;
et ledit deuxième module de programme contient des instructions de programme (318) pour exécuter automatiquement ledit deuxième jeu de commandes sans renvoyer de résultat d'exécution au dit premier module de programme.

4. Procédé selon la revendication 3, **caractérisé en ce que** ledit premier fichier comprend
une première section (260, 268) pour recevoir des commandes envoyées par d'autres modules de programme, et
une deuxième section (258, 266) contenant un indice d'état dudit premier fichier,
et **en ce que** ledit deuxième module de programme examine ledit indice avant d'envoyer ledit premier jeu de commandes.

5. Procédé selon la revendication 4, **caractérisé en ce que** ladite deuxième section contient un premier pointeur (a) associé à l'une desdites commandes dans ledit premier fichier, ledit premier pointeur étant modifiable pour refléter l'ajout dudit premier jeu de commandes au dit premier fichier.

6. Procédé selon la revendication 5, **caractérisé en ce que** ladite deuxième section contient en outre un deuxième pointeur (ii) désignant une commande du premier fichier qui est en train d'être exécuté par ce premier module de programme (CA).

7. Procédé selon la revendication 4, **caractérisé en ce que** ledit indice a au moins un premier état et un deuxième état, ledit premier état indiquant que ledit premier fichier est prêt à accepter de nouvelles commandes, et ledit deuxième état indiquant que ledit premier fichier n'est pas en mesure d'accepter de nouvelles commandes, et ledit deuxième état indiquant que ledit premier fichier n'est pas en mesure d'accepter de nouvelles commandes.

8. Procédé selon la revendication 4, **caractérisé en ce que** le premier fichier comprend en outre un jeu de paramètres (252) relatif à des caractéristiques dudit premier module de programme (CA), et ledit premier module de programme contient des instructions de programme (312) pour utiliser lesdits paramètres lorsque ledit premier module de programme est appelé.

9. Appareil comprenant un ordinateur exécutant, dans un environnement à base de fenêtres, un programme d'application étant composé de modules de programmes liés, **caractérisé en ce que** :
chacun desdits programmes de module (CA) étant adapté pour contrôler une fenêtre à laquelle est associé un fichier respectif (250) contenant des commandes (dans 260 et 268) qui doivent être exécutées par le module,
et **en ce qu'**un premier module (CA) est adapté pour écrire des commandes dans le fichier (250) d'un deuxième module (CA) pour qu'elles soient exécutées par ce dernier sans établir de communication avec ledit premier module.

10. Appareil selon la revendication 9, **caractérisé en ce qu'**il comprend
une pluralité de fichiers de contenu multimédia (fichiers bitmap, fichiers son),
et **en ce qu'**au moins un desdits fichiers (250) associés à un premier desdits modules de programme (CA) comprend des références à au moins un premier de ces fichiers de contenu multimédia et à au moins un deuxième programme de module pour créer une première présentation de contenu multimédia respective, et pour appeler un deuxième module de programme (CA), lors de l'appel dudit premier module de programme (CA),
le fichier associé au dit deuxième module de programme (CA) comprenant une référence à un deuxième desdits fichiers de contenu multimédia pour créer une deuxième présentation de contenu multimédia respective,
et par des moyens pour arrêter ledit deuxième module de programme sans informer ledit premier module de programme.

11. Appareil selon la revendication 10, **caractérisé en ce que** lesdits fichiers (250) associés au module de programme ont chacun une première section (260, 268) pour recevoir des commandes envoyées par d'autres modules de programme (CA),
ledit deuxième module de programme (CA) contient des instructions de programme (316, 318) pour envoyer un premier jeu de commandes au fichier associé au dit premier module de programme (CA),
ledit premier module de programme (CA) contient des instructions de programme pour exécuter automatiquement ledit premier jeu de commandes sans renvoyer de résultats d'exécution au dit deuxième module de programme, ledit premier module de programme contenant en outre des instructions de programme pour envoyer un jeu de commandes (316, 318) au fichier associé au dit deuxième module de programme,
et ledit deuxième module de programme contient des instructions de programme (318) pour exécuter automatiquement ledit deuxième jeu de commandes sans renvoyer de résultats d'exécution au dit premier module de programme.

12. Appareil selon la revendication 11, **caractérisé en ce que** le fichier (250) associé au dit premier module de programme, comprend une deuxième section (258, 266) contenant un indice d'état de ce fichier pour qu'il soit examiné par ce deuxième module de programme avant qu'il n'envoie ce premier jeu de commandes (DSF).

13. Appareil selon la revendication 12, **caractérisé en ce que** ladite deuxième section contient en outre un premier pointeur (a) associé à l'une desdites commandes dans ledit fichier, ledit premier pointeur étant modifiable pour refléter l'ajout de ce premier jeu de commandes au dit fichier.

14. Système selon la revendication 13, **caractérisé en ce que** ladite deuxième section contient en outre un deuxième pointeur (i) désignant une instruction dans ledit fichier qui est en train d'être exécuté par ledit premier module de programme (CA).

15. Appareil selon la revendication 12, **caractérisé en ce que** ledit indice a au moins un premier état (prêt) et un deuxième état (occupé), ledit premier état indiquant que ledit fichier est prêt à accepter de nouvelles commandes, et ledit deuxième état indiquant que ledit fichier n'est pas en mesure d'accepter de nouvelles instructions.

16. Appareil selon la revendication 12, **caractérisé en ce que** le fichier associé à ce premier module de programme comprend en outre un jeu de paramètres (312) relatif à des caractéristiques dudit premier module de programme (CA), lequel module contient des instructions de programme pour utiliser lesdits paramètres lorsqu'il est appelé.
